# FASCICULE DE BREVET EUROPEEN

(11) **EP 4 264 977 B1**
(45) Date de publication et mention de la délivrance du brevet: **26.08.2026**
(21) Numéro de dépôt: 21854672.9
(22) Date de dépôt: 20.12.2021
(51) Int. Cl.: H04W 4/90, H04L 65/1016, H04L 65/10

(54) **MÉTHODES, DISPOSITIFS ET SYSTÈMES DE GESTION D'UNE TABLE DE NUMÉROS D'URGENCE POUR UN TERMINAL UTILISATEUR EN ITINÉRANCE**
VERFAHREN, GERÄTE UND SYSTEM ZUR VERWALTUNG EINER NOTRUFNUMMERNTABELLE FÜR EIN ROAMING-BENUTZERTERMINAL
METHODS, DEVICES AND SYSTEM FOR MANAGING AN EMERGENCY NUMBER TABLE FOR A ROAMING USER TERMINAL

(30) Priorité: 21.12.2020 FR 2013828
(43) Date de publication de la demande: 25.10.2023
(73) Titulaire: Orange, 92130 Issy-les-Moulineaux (FR)
(72) Inventeur: DOREE, José, 92326 Châtillon Cedex (FR); ALLAIN, Mickael, 92326 Châtillon Cedex (FR)
(74) Mandataire: Vidon Brevets & Stratégie
(86) Numéro de dépôt international: PCT/FR2021/052402
(87) Numéro de publication internationale: WO 2022/136786

(56) Documents cités:
- EP-A1- 3 193 542
- US-A1- 2018 191 786
- "3rd Generation Partnership Project; Technical Specification Group Services and System Aspects; IP Multimedia Subsystem (IMS) emergency sessions (Release 16)", vol. SA WG2, no. V16.3.0, 17 December 2020 (2020-12-17), pages 1 - 65, XP051999841, Retrieved from the Internet <URL:https://ftp.3gpp.org/Specs/latest/Rel-16/23_series/23167-g30.zip 23167-g30.docx> [retrieved on 20201217]
- TELECOM ITALIA: "Database for non UE detectable emergency sessions", vol. SA WG2, no. Sophia Antipolis, France; 20160411 - 20160415, 14 April 2016 (2016-04-14), XP051092103, Retrieved from the Internet <URL:http://www.3gpp.org/ftp/tsg_sa/WG2_Arch/TSGS2_114_Sophia_Antipolis/Docs/> [retrieved on 20160414]
- "3rd Generation Partnership Project; Technical Specification Group Services and System Aspects; Study on S8 Home Routing Architecture for VoLTE (Release 14)", 3GPP STANDARD ; TECHNICAL REPORT ; 3GPP TR 23.749, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 22 June 2016 (2016-06-22), pages 1 - 38, XP051295182
- "3rd Generation Partnership Project; Technical Specification Group Services and System Aspects; IP Multimedia Subsystem (IMS); Stage 2 (Release 16)", vol. SA WG2, no. V16.5.0, 24 September 2020 (2020-09-24), pages 1 - 349, XP051960877, Retrieved from the Internet <URL:ftp://ftp.3gpp.org/Specs/archive/23_series/23.228/23228-g50.zip 23228-g50.docx> [retrieved on 20200924]

## Description

### Domaine technique de l'invention

Le domaine de l'invention est celui d'un réseau de communication, configuré pour fournir des services multimédia sur IP, tels que la voix sur IP ou VolP (pour « Voice over IP », en anglais). Par exemple, un tel réseau présente une architecture standardisée de type IMS (pour « IP Multimedia Systems », en anglais).

En particulier, l'invention concerne la gestion d'une table de numéros de téléphone d'urgence locaux à un autre réseau de communication que celui d'un terminal d'un utilisateur, dit réseau visité, par le réseau de communication de cet utilisateur, dit réseau nominal.

### Art antérieur

Dans un réseau de communication mobile mettant en œuvre une architecture IMS, telle que définie par le 3GPP (pour « 3rd Generation Partnership Project », en anglais), l'ETSI et l'IETF, et basée sur le protocole de signalisation SIP (pour « Session Initiation Protocol », en anglais) pour l'initialisation de sessions multimédias utilisées par la visioconférence ou la VolP, on connaît différentes techniques permettant à un utilisateur de ce réseau d'accéder à un service multimédia fourni par ce réseau, lorsqu'il est en situation de mobilité (ou « roaming », en anglais) et s'est attaché à un autre réseau de communication mobile.

Par exemple, au sein d'un réseau de téléphonie mobile mettant en œuvre la norme LTE (pour « Long Term Evolution », en anglais) du 3GPP, l'une de ces techniques dites d'interconnexion de réseaux, référencée sous le nom de mode « S8hr » (pour « S8 home routing », en anglais), tend à se généraliser.

Les documents 3GPP pertinents suivants sont cités :
XP051999841, 3GPP TS 23.167 v16.3.0, avec date de publication 17-12-2020 et intitulé "3rd Generation Partnership Project; Technical Specification Group Services and System Aspects; IP Multimedia Subsystem (IMS) emergency sessions (Release 16)";
XP051092103, S2-161985, avec date de publication 14-04-2016 et intitulé "Database for non UE detectable emergency sessions", par Telecom Italia ;
XP051295182, 3GPP TR 23.749 v14.0.0, avec date de publication 22-065-2016 et intitulé "3rd Generation Partnership Project; Technical Specification Group Services and System Aspects; Study on S8 Home Routing Architecture for VoLTE (Release 14)";
XP051960877, 3GPP TS 23.228 v16.5.0, avec date de publication 24-09-2020 et intitulé "3rd Generation Partnership Project; Technical Specification Group Services and System Aspects; IP Multimedia Subsystem (IMS); Stage 2 (Release 16)".

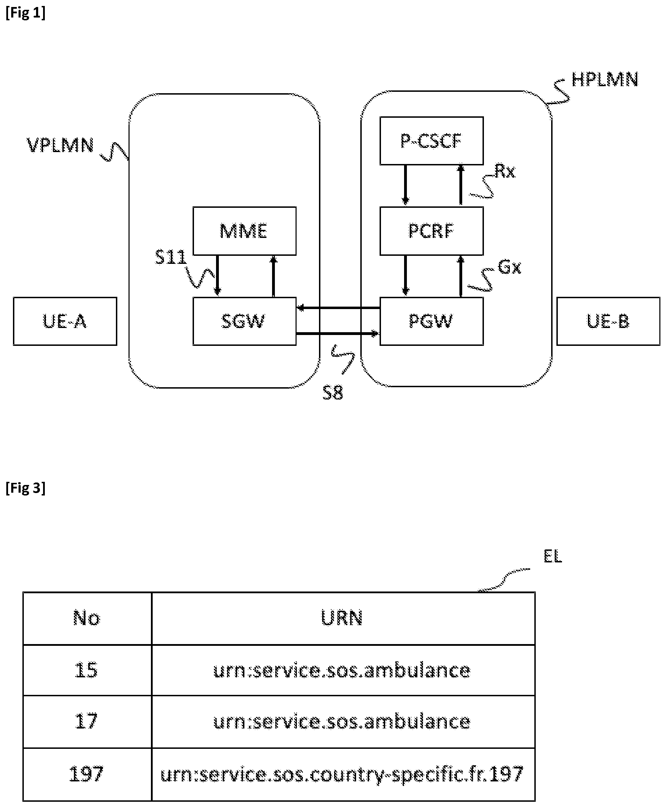

Sur la figure 1, on a représenté de façon schématique un exemple d'architecture d'interconnexion de deux réseaux de communication mettant en œuvre cette technique « S8hr », qui est par exemple décrite dans le document IR.65- IMS Roaming, Interconnection and Interworking Guidelines publié par l'association internationale GSMA (pour « Global System for Mobile Communications Association ») le 2 décembre 2020.

Elle présente à droite, un réseau de communication HPLMN (pour « Home Public Land Mobile Network », en anglais) auquel est abonné un utilisateur d'un terminal UE-A, qu'on appellera dans la suite réseau nominal de cet utilisateur, et à gauche, un autre réseau de communication VPLMN (pour « Visited Public Land Mobile Network », en anglais), interconnecté au réseau nominal HPLMN, auquel est attaché le terminal UE-A en situation de mobilité. Dans la suite, on désignera ce deuxième réseau VPLMN par réseau visité. Par exemple, le terminal UE-A souhaite établir une communication de voix sur IP avec un terminal UE-B.

Selon cette technique « S8hr », dite de routage vers le réseau nominal, l'ensemble des flux liés à l'exécution d'un service multimédia pour cet utilisateur UE-A en situation de mobilité, que ce soit les flux de signalisation ou les flux de données multimédia, se terminent dans le réseau nominal. En particulier, les flux de signalisation IMS sont acheminés entre le réseau visité et le réseau nominal via une interface IP réseau à réseau de type IPX (pour « IP Exchange Network », en anglais), conformément à un modèle d'interconnexion défini et spécifié par l'association GSMA. Il s'agit de la même interface désignée de façon standard par S8 que celle utilisée pour le trafic de données multimédia, entre une passerelle de services SGW (pour « Serving Gateway », en anglais) du réseau visité et une passerelle d'accès au réseau nominal PGW (pour « Packet Data Network (PDN) Gateway », en anglais), laquelle constitue une porte d'entrée unique d'acheminement des flux de données IP vers le système IMS du réseau nominal.

Autrement dit, le mode de raccordement du terminal UE-A au système IMS de son réseau nominal suit le même principe que celui utilisé pour le trafic de données internet (l'ensemble du trafic reste traité dans le réseau nominal), ce qui simplifie le déploiement et explique donc la popularité de cette technique auprès des opérateurs de réseaux de communication mobile.

Cependant, cette technique d'interconnexion présente des inconvénients.

L'un d'entre eux est relatif au traitement des appels d'urgence.

En effet, les appels d'urgence, par nature, sont toujours traités par des services (police, pompiers, SAMU,...) localisés dans le réseau visité VPLMN.

Dans le cas où le numéro de téléphone composé par le terminal de l'utilisateur est internationalement reconnu comme un appel d'urgence (par exemple : le 112, numéro d'urgence accessible dans toute l'Union Européenne ou le 911 pour l'Amérique du nord), le terminal de l'utilisateur est configuré pour mettre en œuvre une procédure spécifique d'attachement au réseau visité via une connexion dite d'urgence (ou « Emergency », en anglais). Les flux de données IP ne sont donc pas traités selon l'architecture de la figure 1, mais l'appel d'urgence est entièrement traité dans le réseau visité VPLMN.

Il existe cependant des numéros de téléphone d'urgence qui ne sont pas reconnus comme tels par les terminaux mobiles. C'est le cas, en particulier, de numéros abrégés, dits locaux. Par exemple en France, on utilise les numéros d'urgence locaux suivants : le 15 (urgences médicales ou SAMU), le 17 (interventions de police), le 18 (lutte contre les incendies), le 115 (urgences sociales ou SAMU social), etc.

De façon connue, lorsque le terminal mobile d'un utilisateur est localisé dans son réseau nominal HPLMN, la procédure standardisée d'établissement d'un appel d'urgence est alors la suivante :
1. Le terminal mobile compose un numéro local (par exemple : le 15) et demande à établir une communication voix avec le service d'urgence (urgences médicales) associé, sans que cette communication ne soit détectée comme un appel d'urgence par le terminal ;
2. Le réseau nominal HPLMN détecte qu'il s'agit d'un numéro d'urgence local, et renvoie une réponse SIP 380 indiquant d'établir une connexion de type « appel d'urgence » (ou « Emergency », en anglais) avec une destination retraduite sous la forme d'un identifiant de ressource normalisé URN (pour « Uniform Resource Name », en anglais). Cet identifiant URN identifie un emplacement de la ressource concernée qui est accessible depuis n'importe quel réseau de communication. Par exemple, l'identifiant de ressource associé au numéro d'urgence local 15 est « urn:service:sos.ambulance » ;
3. Le terminal mobile réémet sa demande d'établissement d'une communication avec l'identifiant de ressource URN reçu ; et
4. Le réseau nominal HPLMN achemine cet appel avec les règles de priorité et le routage qui s'appliquent à un appel d'urgence de ce type.

Du fait que ces numéros locaux ne sont pas référencés dans la nomenclature internationale, ils n'ont donc qu'une signification locale au réseau de communication dans lequel ils sont définis (qui peut être le réseau nominal HPLMN ou le réseau visité VPLMN).

Il en résulte que, lorsque le terminal mobile est en situation de mobilité dans un réseau visité connecté au réseau nominal du terminal selon la technique d'interconnexion S8hr qui vient d'être présentée, ces numéros de téléphone locaux ne sont pas interprétés comme des numéros d'urgence par le terminal mobile et ils ne peuvent donc pas être traités comme tels par le réseau nominal HPLMN.

En particulier, le bon fonctionnement de l'étape 2 ci-dessus nécessite que le réseau nominal reconnaisse que le numéro d'urgence composé depuis le réseau visité est un numéro d'urgence dudit réseau visité.

Dans l'état de l'art, la solution préconisée consiste à configurer statiquement l'ensemble des numéros d'urgence locaux de l'ensemble des réseaux nationaux avec lesquels le réseau nominal est susceptible de s'interconnecter, puis d'y associer leur transcription dans un format exploitable par le réseau nominal, tel qu'un identifiant de ressource normalisée de type URN.

Cette technique est évidemment très lourde du fait du grand nombre d'opérateurs de réseaux de communications dans le monde. Les tables de correspondance entre numéros locaux et identifiants standardisés sont très complexes à maintenir dans le temps notamment pour ajouter les nouveaux numéros, supprimer les numéros obsolètes, ajouter de nouveaux opérateurs, etc. En outre, une telle configuration statique est sujette à erreur, par exemple lors de la saisie des correspondances entre numéros et identifiants de ressources normalisées de type URN, des codes opérateurs, etc.

Il existe donc un besoin d'une solution plus efficace qui évite les inconvénients qui viennent d'être exposés.

L'invention vient améliorer la situation.

### Présentation de l'invention

La présente invention est définie par l'objet des revendications indépendantes.

Par « identifiant de ressource normalisé », on entend un identifiant unique dans le temps et l'espace pour ladite ressource, tel qu'un identifiant URN évoqué précédemment.

Lorsqu'un terminal d'un utilisateur d'un réseau nominal est en situation de mobilité dans un réseau visité interconnecté avec le réseau nominal et demande à établir une communication multimédia, cette communication est gérée par son réseau nominal, qui reçoit du réseau visité une demande d'enregistrement du terminal. Avec l'invention, le réseau nominal obtient dynamiquement de la part du réseau visité une table de numéros d'urgence locaux au réseau visité.

L'invention repose ainsi sur une approche tout-à-fait nouvelle et inventive de la gestion des appels d'urgence pour un terminal d'un utilisateur en situation de mobilité dans un réseau visité, qui consiste pour le réseau nominal à obtenir dynamiquement du réseau visité une table de correspondance entre des numéros d'urgence locaux en vigueur dans ce réseau visité et des identifiants de ressources normalisés accessibles depuis n'importe quel autre réseau de communication. De la sorte, le réseau nominal dispose des informations nécessaires pour renvoyer à un terminal d'un utilisateur en situation de mobilité les informations nécessaires pour établir un appel d'urgence dans le réseau visité, sans qu'aucune configuration statique préalable des numéros d'urgence spécifiques (autrement dit, locaux) à ce réseau visité ne soit nécessaire. La gestion des appels d'urgence émanant de terminaux en situation de mobilité est donc améliorée. Un autre avantage de l'invention est de réutiliser des interfaces et des techniques connues des réseaux de communications actuels ou futurs, standardisées ou en cours de standardisation.

L'invention s'applique particulièrement mais non exclusivement au cas où le réseau visité et le réseau nominal s'interconnectent selon un mode de connexion de type « S8hr », selon lequel les flux de signalisation multimédia sont acheminés par le même canal que les flux de données.

Toutefois, le champ d'application de l'invention ne se limite pas à cet exemple, mais s'étend à toute autre architecture d'interconnexion entre réseau nominal et réseau visité selon laquelle les flux de données du terminal de l'utilisateur se terminent dans le réseau nominal. Par exemple, elle trouve aussi une application dans le contexte des réseaux de communication de 5ème génération ou 5G au sein d'une architecture 5GC (pour «5G Core », en anglais) du réseau cœur, selon laquelle les flux de signalisation multimédia d'un terminal d'un utilisateur en situation de mobilité dans un réseau visité sont routés dans son réseau nominal via une interface N9 de connexion entre les deux réseaux et les flux de données via une interface N16 de connexion entre les deux réseaux.

Selon un aspect de l'invention, l'obtention comprend l'émission d'une demande de transmission de la table de numéros d'urgence à destination d'un équipement de contrôle du réseau nominal pour relais vers le réseau visité, ledit équipement de contrôle étant configuré pour gérer des ressources réseau mises à disposition du terminal de l'utilisateur, et la réception d'une réponse comprenant ladite table.

Un avantage est que l'équipement de proximité n'a pas à gérer d'échanges avec le réseau visité, cette responsabilité étant laissée à un autre équipement du réseau nominal, à savoir l'équipement de contrôle. Un autre avantage est qu'il obtient une table de numéros d'urgence à jour.

Selon un autre aspect de l'invention, le procédé comprend en outre
- sur réception d'un identifiant du réseau visité, la vérification qu'une dite table de numéros d'urgence est déjà disponible dans le réseau nominal pour cet identifiant ; et
- la demande de transmission est émise lorsqu'aucune table de numéros d'urgence n'est disponible ou lorsque la table de numéros d'urgence disponible est associée à un indicateur de validité dépassée.

Un avantage est qu'une demande est émise vers le réseau visité seulement lorsque c'est nécessaire. Les ressources de bande passante sont donc économisées tout en garantissant que la table de numéros d'urgence du réseau visité n'est pas obsolète.

Selon encore un autre aspect de l'invention, ladite demande de transmission de la table de numéros d'urgence est transmise dans un message comprenant l'identifiant du réseau visité.

Par exemple, le message en question est une demande d'information de type Diameter AAR comprenant l'identifiant du réseau visité et la demande est comprise dans une action de type dédié, intitulée par exemple « Emergency List ».

Selon un autre aspect de l'invention, la demande de transmission de la table de numéros d'urgence est insérée dans un message de requête d'obtention de l'identifiant du réseau visité, ledit message étant transmis suite à la réception de la demande d'enregistrement du terminal de l'utilisateur par l'équipement de proximité.

Selon ce mode de réalisation, l'équipement de proximité demande systématiquement et de façon anticipée la table de numéros d'urgence du réseau visité par le terminal de l'utilisateur. Un avantage est que les opérations à mettre en œuvre au niveau de cet équipement sont simplifiées. Le fait de réutiliser un message de signalisation qui est de toute façon transmis à l'équipement de contrôle des ressources réseau mises à disposition du terminal permet d'optimiser les ressources mobilisées par la signalisation.

Avantageusement, à réception d'une réponse en provenance de l'équipement de contrôle, ladite réponse comprenant ladite table, le procédé comprend une étape de stockage de ladite table dans une mémoire locale ou distante du réseau nominal.

L'invention concerne également un produit programme d'ordinateur comprenant des instructions de code de programme pour la mise en œuvre d'un procédé de traitement selon l'invention, tel que décrit précédemment, lorsqu'il est exécuté par un processeur.

L'invention vise également un support d'enregistrement lisible par un ordinateur sur lequel sont enregistrés les programmes d'ordinateur tels que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargés sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de traitement précité.

L'invention concerne aussi un dispositif de traitement d'une demande d'enregistrement d'un terminal d'un utilisateur d'un réseau de communication selon la revendication 13. Avantageusement, ledit dispositif est configuré pour mettre en œuvre le procédé de traitement précité, selon ses différents modes de réalisation.

Avantageusement, ledit dispositif est intégré dans un équipement de proximité du réseau nominal. L'équipement de proximité, le dispositif de traitement et le programme d'ordinateur correspondant précités présentent au moins les mêmes avantages que ceux conférés par le procédé de traitement précité selon les différents modes de réalisation de la présente invention.

Corrélativement, l'invention concerne aussi un procédé de mise à disposition par un réseau de communication d'un terminal d'un utilisateur, dit réseau nominal, d'une table de numéros d'urgence (EL) d'un autre réseau de communication, dit réseau visité, auquel est attaché ledit terminal, ladite table associant à des numéros de téléphone d'urgence locaux au réseau visité, des identifiants de ressources normalisés correspondant auxdits numéros.

Le procédé est mis en œuvre dans le réseau nominal par un équipement de contrôle de ressources réseau mises à disposition du terminal et comprend :
l'obtention de ladite table de numéros d'urgence dans un message de signalisation reçu du réseau visité suite à l'attachement du terminal de l'utilisateur ; et
la transmission de ladite table de numéros d'urgence à un équipement de proximité du réseau nominal.

Avec l'invention, c'est l'équipement de contrôle qui obtient directement la table de numéros d'urgence du réseau visité. Un avantage est que cette table transite par des interfaces habituellement utilisées par cet équipement de contrôle, typiquement pour traiter une demande d'établissement de session réseau du terminal d'un utilisateur en provenance du réseau visité. Selon un aspect de l'invention, ledit message de signalisation reçu du réseau visité comprend comprenant en outre une demande de création d'une session pour le terminal de l'utilisateur Avantageusement, la table de numéros d'urgence a été insérée par le réseau nominal dans le message de signalisation comprenant la demande de création d'une session Diameter pour le terminal de l'utilisateur suite à la réception par le réseau visité de sa requête d'attachement, ce qui permet de mutualiser un même message destiné à l'équipement de contrôle du réseau nominal. Aucune requête du réseau nominal n'est donc requise pour obtenir cette table. La signalisation est donc optimisée.

Selon un autre aspect de l'invention, le procédé comprend, sur réception d'une requête d'un équipement de proximité du réseau nominal, la transmission de ladite table audit équipement de proximité.

Un avantage est que dans ce mode de réalisation, le réseau nominal reçoit la table de numéros d'urgence en amont de la procédure d'enregistrement du terminal de l'utilisateur à son réseau nominal. Ainsi, dès réception d'une demande de l'équipement de proximité du réseau nominal, il peut lui envoyer immédiatement la table.

Selon un autre aspect de l'invention, le procédé comprend la réception d'une demande de transmission de ladite table en provenance de l'équipement de proximité et le relais de ladite demande à destination du réseau visité.

Un avantage est que la table n'est pas reçue systématiquement, mais requise lorsque l'équipement de proximité en formule la demande.

La demande de l'équipement de proximité peut être comprise dans un message spécifique comprenant un identifiant du réseau visité ou insérée dans un message de signalisation existant, comme par exemple un message de requête d'un identifiant du réseau visité.

L'invention concerne également un produit programme d'ordinateur comprenant des instructions de code de programme pour la mise en œuvre d'un procédé de mise à disposition d'une table selon l'invention, tel que décrit précédemment, lorsqu'il est exécuté par un processeur.

L'invention vise également un support d'enregistrement lisible par un ordinateur sur lequel sont enregistrés les programmes d'ordinateur tels que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargés sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de mise à disposition précité.

L'invention concerne aussi un dispositif de mise à disposition par un réseau de communication d'un utilisateur d'un terminal, dit réseau nominal, d'une table de numéros d'urgence d'un autre réseau de communication, dit réseau visité, auquel est attaché ledit terminal, ladite table associant à des numéros de téléphone d'urgence locaux au réseau visité, des identifiants de ressources normalisés correspondant auxdits numéros, caractérisé en ce que le dispositif est configuré pour mettre en œuvre dans le réseau nominal au niveau d'un équipement de contrôle de ressources réseau mises à disposition du terminal:
l'obtention de ladite table de numéros d'urgence dans un message de signalisation reçu du réseau visité suite à l'attachement du terminal de l'utilisateur ; et
la transmission de ladite table de numéros d'urgence à un équipement de proximité du réseau nominal.

Avantageusement, ledit dispositif est configuré pour mettre en œuvre le procédé de mise à disposition précité, selon ses différents modes de réalisation.

Avantageusement, ledit dispositif est intégré dans un équipement de contrôle de ressources réseau mises à disposition du terminal de l'utilisateur dans le réseau nominal.

L'équipement de contrôle, le dispositif de mise à disposition et le programme d'ordinateur correspondant précités présentent au moins les mêmes avantages que ceux conférés par le procédé de mise à disposition précité selon les différents modes de réalisation de la présente invention. Corrélativement, l'invention concerne aussi un procédé de gestion d'une table de numéros d'urgence d'un réseau de communication, dit réseau visité, auquel est attaché un terminal d'un utilisateur d'un autre réseau de communication, dit réseau nominal, ladite table associant au moins un numéro de téléphone d'urgence local au réseau visité à un identifiant de ressource normalisé.

Ledit procédé est mis en œuvre par un équipement de gestion d'une mobilité du terminal du réseau visité et comprend le stockage de ladite table de numéros d'urgence et la transmission de ladite table au réseau nominal, suite à la réception d'une demande d'attachement du terminal au réseau visité.

Selon l'invention, l'équipement en charge de la mobilité du terminal de l'utilisateur dans le réseau visité est configuré pour stocker et maintenir une table de numéros d'urgence du réseau visité et pour la transmettre au réseau nominal du terminal de l'utilisateur lorsque ce dernier s'attache au réseau visité.

De la sorte, le réseau nominal obtient dynamiquement une table de numéros d'urgence à jour.

Il n'est donc plus nécessaire de mettre en œuvre une configuration statique, fastidieuse complexe et source d'erreurs. Le traitement des appels d'urgence d'un terminal d'un utilisateur en situation de mobilité est donc amélioré.

Selon un aspect de l'invention, ladite table est transmise dans un message de signalisation comprenant une demande de création d'une session pour le terminal de l'utilisateur avec le réseau nominal.

Un avantage est que cette transmission est systématique dès que l'utilisateur demande à établir une session multimédia en situation de mobilité dans le réseau visité. Le fait de mutualiser un message de signalisation qui serait de toutes façons transmis permet d'optimiser les ressources mobilisées par la signalisation. On note que cette session multimédia induit l'établissement d'une session réseau gérée par l'équipement de contrôle.

Selon un autre aspect de l'invention, ladite table est transmise sur réception d'une demande du réseau nominal, ladite demande ayant été reçue suite à la transmission par le réseau visité d'une demande d'enregistrement du terminal de l'utilisateur au réseau nominal.

La table de numéros d'urgence du réseau visité n'est transmise que lorsque le réseau nominal la demande. Les ressources en bande passante sont donc économisées.

L'invention concerne également un produit programme d'ordinateur comprenant des instructions de code de programme pour la mise en œuvre d'un procédé de gestion d'une table selon l'invention, tel que décrit précédemment, lorsqu'il est exécuté par un processeur.

L'invention vise également un support d'enregistrement lisible par un ordinateur sur lequel sont enregistrés les programmes d'ordinateur tels que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargés sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de gestion précité.

L'invention concerne aussi un dispositif de gestion d'une table de numéros d'urgence d'un réseau de communication, dit réseau visité, auquel est attaché un terminal d'un utilisateur d'un autre réseau de communication, dit réseau nominal, ladite table associant au moins un numéro de téléphone d'urgence local au réseau visité à un identifiant de ressource normalisé.

Selon l'invention, ledit dispositif est configuré pour mettre en œuvre au niveau d'un équipement de gestion d'une mobilité du terminal du réseau visité :
le stockage de ladite table de numéros d'urgence et la transmission de ladite table au réseau nominal, suite à une demande d'attachement du terminal au réseau visité.

Avantageusement, ledit dispositif est configuré pour mettre en œuvre le procédé de mise à disposition précité, selon ses différents modes de réalisation.

Avantageusement, ledit dispositif est intégré dans un équipement de gestion d'une mobilité d'un terminal d'un utilisateur dans le réseau visité.

L'équipement de gestion d'une mobilité, le dispositif de gestion et le programme d'ordinateur correspondant précités présentent au moins les mêmes avantages que ceux conférés par le procédé de gestion précité selon les différents modes de réalisation de la présente invention. Corrélativement, l'invention concerne enfin un système de gestion d'une demande d'enregistrement d'un terminal d'un utilisateur d'un réseau de communication, dit réseau nominal, ledit terminal de l'utilisateur étant attaché à un autre réseau de communication, dit réseau visité.

Le système comprend ledit terminal de l'utilisateur, le dispositif de traitement d'une demande d'enregistrement d'un terminal d'un utilisateur, le dispositif de mise à disposition d'une table de numéros d'urgence du réseau visité et le dispositif de gestion d'une table de numéros d'urgence du réseau visité précités.

### Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] : déjà décrite, présente les interfaces entre différents équipements nœuds d'un réseau nominal d'un terminal d'un utilisateur et d'un réseau visité par ce terminal de l'utilisateur selon un premier exemple d'architecture ;

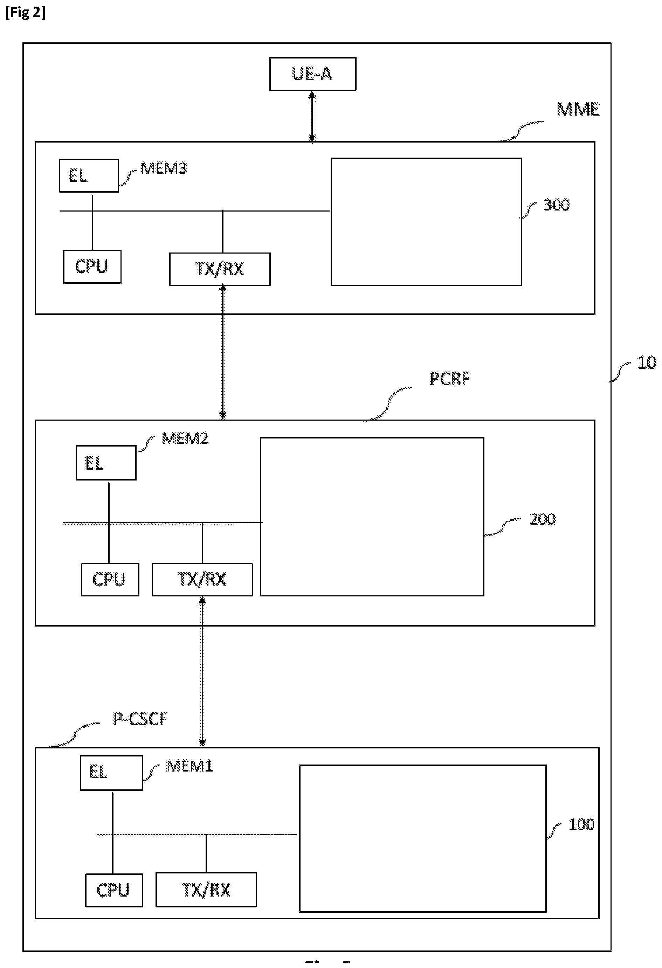

[Fig 2] : illustre de façon schématique des exemples d'architecture d'un équipement de proximité du réseau nominal, ledit équipement de proximité intégrant un dispositif de traitement d'une demande d'enregistrement au réseau nominal en provenance d'un terminal d'un utilisateur selon un mode de réalisation de l'invention, d'un équipement de contrôle de ressources réseau mise à disposition du terminal de l'utilisateur dans le réseau nominal, ledit équipement de contrôle intégrant un dispositif de mise à disposition d'une table de numéros d'urgence d'un réseau visité par le terminal de l'utilisateur selon un mode de réalisation de l'invention et d'un équipement de gestion de la mobilité d'un terminal d'un utilisateur dans le réseau visité intégrant un dispositif de gestion d'une table de numéros d'urgence locaux au réseau visité selon un mode de réalisation de l'invention.
[Fig 3] : présente un exemple de table de numéros d'urgence associant des numéros de téléphone locaux à un réseau de communication, des identifiants de ressources normalisés ;
[Fig 4A] [Fig 4B] : décrivent sous forme d'un logigramme les étapes d'un procédé de traitement d'une demande d'enregistrement d'un terminal d'un utilisateur d'un réseau de communication dit réseau nominal, ledit terminal de l'utilisateur étant attaché à un autre réseau de communication, dit réseau visité, selon des exemples de réalisation de l'invention ;
[Fig 5A] [Fig 5B] [Fig 5C] : décrivent sous forme d'un logigramme les étapes d'un procédé de mise à disposition d'une table de numéros d'urgence d'un réseau de communication visité par un terminal d'un utilisateur d'un réseau de communication nominal, selon des exemples de réalisation de l'invention ;
[Fig 6A] [Fig 6B]: décrivent sous forme d'un logigramme les étapes d'un procédé de gestion de ladite table de numéro d'urgence d'un réseau de communication visité par un terminal d'un utilisateur d'un autre réseau de communication, dit réseau nominal, selon des exemples de réalisation de l'invention ;
[Fig 7] : décrit sous forme d'un diagramme de flux les échanges entre le réseau visité et le réseau nominal selon un premier exemple de réalisation de l'invention ;
[Fig 8] : décrit sous forme d'un diagramme de flux les échanges entre le réseau visité et le réseau nominal selon un deuxième exemple de réalisation de l'invention ;
[Fig 9] : présente de façon schématique les interfaces entre différents équipements nœuds d'un réseau nominal d'un terminal d'un utilisateur et d'un réseau visité par ce terminal de l'utilisateur selon un autre exemple d'architecture ;
[Fig 10] : décrit un exemple de structure matérielle d'un dispositif de traitement d'une demande d'enregistrement d'un terminal d'un utilisateur d'un réseau nominal, lorsqu'il est attaché à un autre réseau de communication, dit réseau visité, selon l'invention ;
[Fig 11] : décrit un exemple de structure matérielle d'un dispositif de mise à disposition d'une table de numéros d'urgence d'un réseau de communication visité par un terminal d'un utilisateur d'un autre réseau de communication, dit réseau nominal, ledit dispositif étant intégré au réseau nominal, selon l'invention ; et
[Fig 12] : décrit un exemple de structure matérielle d'un dispositif de gestion d'une table de numéros d'urgence d'un réseau de communication visité par un terminal d'un utilisateur d'un autre réseau de communication, dit réseau visité, ledit dispositif étant intégré au réseau visité, selon l'invention.

### Description détaillée de l'invention

Le principe général de l'invention repose sur la gestion dans un réseau de communication visité par un terminal d'un utilisateur d'un autre réseau de communication, dit réseau nominal, les deux réseaux étant interconnectés, d'une table de numéros d'urgence associant à des numéros de téléphone d'urgence locaux au réseau visité des identifiants de ressource normalisés, accessibles depuis le réseau nominal. Selon l'invention, cette table de numéros d'urgence gérée et stockée dans le réseau visité est obtenue par le réseau nominal, une fois que le terminal de l'utilisateur s'est attaché au réseau visité.

De la sorte, le réseau nominal dispose de toutes les informations nécessaires pour établir un appel d'urgence à la demande du terminal de l'utilisateur en situation de mobilité.

Cette invention est particulièrement intéressante dans le contexte d'une architecture IMS et lorsque le réseau visité et le réseau nominal sont interconnectés par une connexion de type « S8hr », selon laquelle les flux de signalisation sont acheminés par le même canal que les flux de données. En effet, dans ce contexte, toute communication multimédia, en particulier une communication voix de type VolP, est complètement gérée par le réseau nominal.

On présente désormais, en relation avec la figure 2 un exemple d'architecture d'un équipement de proximité, qui peut être par exemple un serveur P-CSCF (pour « Proxy-CSCF (Call Session Control Function) » en anglais) se trouvant dans le réseau nominal d'un terminal d'un utilisateur UE-A, selon un mode de réalisation de l'invention. De façon connue, un tel équipement constitue le point de contact du terminal de l'utilisateur UE-A appartenant au réseau nominal HPLMN avec le plan de contrôle du système IMS de ce réseau, en charge de gérer la signalisation des services multimédia. Selon cet exemple de réalisation de l'invention, l'équipement de proximité P-CSCF comprend un dispositif 100 de traitement d'une demande d'enregistrement du terminal de l'utilisateur UE-A aux services multimédia du réseau nominal selon l'invention, configuré pour recevoir cette demande d'enregistrement en provenance du terminal de l'utilisateur UE-A et via le réseau visité VPLMN auquel il s'est attaché, et obtenir sur réception de cette demande une table de numéros d'urgence d'un réseau visité VPLMN par le terminal de l'utilisateur UE-A.

Avantageusement, le dispositif 100 est configuré pour émettre une demande de transmission de la table de numéros d'urgence à destination d'un équipement de contrôle du réseau nominal pour relais vers le réseau visité, ledit équipement de contrôle étant configuré pour gérer des ressources réseau mises à disposition du terminal, et le dispositif 100 étant configuré en outre pour recevoir une réponse comprenant ladite table.

Selon une alternative le dispositif 100 est configuré pour vérifier si une dite table de numéros d'urgence est déjà disponible dans le réseau nominal pour le réseau visité et pour émettre une telle demande de transmission lorsqu'aucune table de correspondance n'est disponible ou lorsque la table de correspondance disponible est associée à un indicateur de validité dépassée.

Un exemple de table EL est présenté en figure 3. Elle associe à des numéros d'urgence locaux des identifiants de ressources normalisés, par exemple de type URN.

Avantageusement, le dispositif 100 est configuré pour stocker la table de numéros d'urgence EL reçue dans une mémoire non volatile MEM1 locale au dispositif 100 ou distante dans le réseau nominal.

Le dispositif 100 comprend enfin un module TX/RX de réception et de transmission de messages en provenance d'autres équipements du réseau nominal, comme par exemple l'équipement de contrôle évoqué précédemment, qui est ici une entité PCRF (pour « Policy Charging Rules Function » en anglais), configuré, de façon connue, pour contrôler, en particulier, la ressource réseau nécessaire pour transporter les flux de données, i. e. de signalisation et de média, du terminal de l'utilisateur UE-A, en fonction de règles prédéterminées et d'autorisations accordées au terminal de l'utilisateur UE-A.

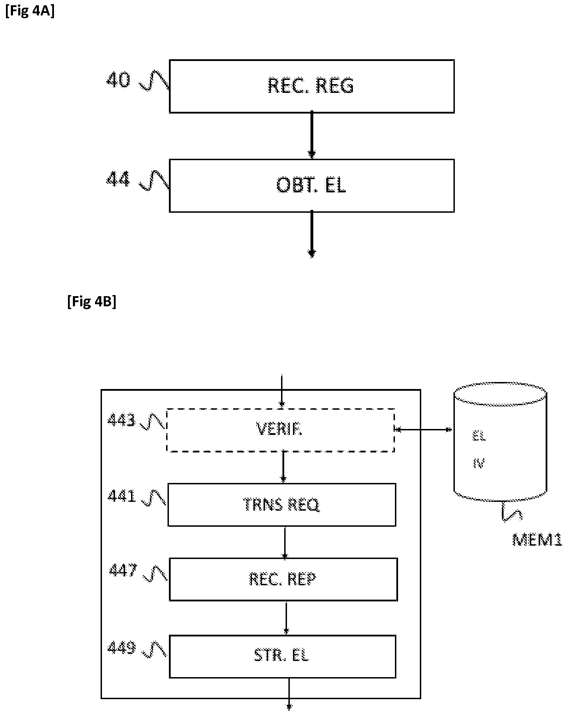

Le dispositif 100 met ainsi en œuvre le procédé de traitement d'une demande d'enregistrement d'un terminal d'un utilisateur selon l'invention qui sera détaillé ci-après en relation avec les figures 4A-4B.

La figure 2 présente aussi un exemple d'architecture d'un équipement de contrôle, tel que par exempleici une entité PCRF selon un mode de réalisation de l'invention. Selon cet exemple de réalisation de l'invention, l'équipement de contrôle PCRF comprend un dispositif 200 de mise à disposition d'une table de numéros d'urgence d'un réseau de communication VPLMN visité par le terminal de l'utilisateur UE-A, configuré pour obtenir ladite table de correspondance dans un message de signalisation reçu du réseau visité suite à l'attachement du terminal de l'utilisateur UE-A à ce réseau visité et transmettre ladite table de numéros d'urgence EL à l'équipement de proximité (P-CSCF) du réseau nominal.

Avantageusement, le dispositif de mise à disposition 200 est configuré pour recevoir une demande de transmission de ladite table en provenance de l'équipement de proximité P-CSCF et la relayer vers le réseau visité VPLMN.

Avantageusement, le dispositif 200 comprend une mémoire non volatile MEM2 dans laquelle est stockée la table de numéros d'urgence EL reçue du réseau visité. Il comprend enfin un module TX/RX de réception et de transmission de messages en provenance/vers d'autres équipements du réseau nominal, comme par exemple l'équipement de proximité P-CSCF ou en provenance/à destination du réseau visité.

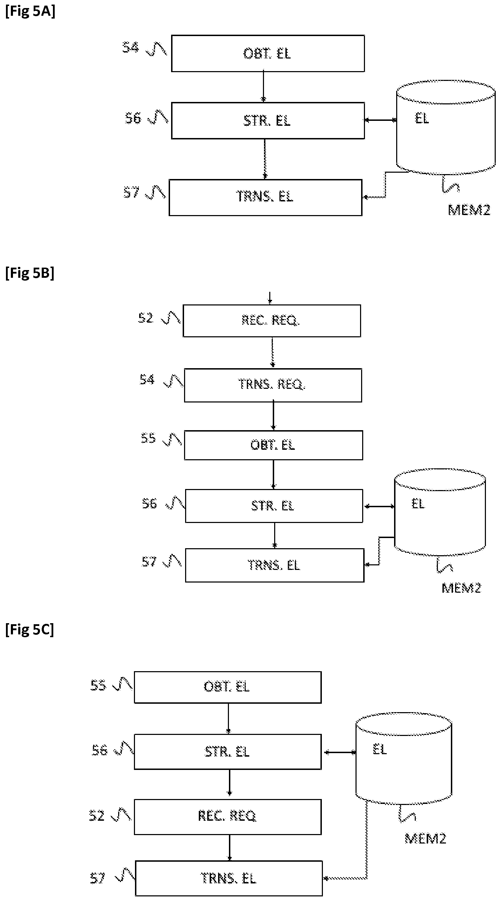

Le dispositif 200 met ainsi en œuvre le procédé de mise à disposition d'une table de numéros d'urgence d'un réseau visité selon l'invention qui sera détaillé ci-après en relation avec les figures 5A-5C.

La figure 2 présente également un exemple d'architecture d'un équipement de gestion de la mobilité, tel que par exemple ici une entité MME (pour « Mobility Management Entity », en anglais) du réseau visité VPLMN. De façon connue, cet équipement de gestion de la mobilité MME est le point d'entrée dans un réseau cœur 4G et permet d'authentifier et de gérer la mobilité du terminal de l'utilisateur UE-A lors de son rattachement au réseau visité. Il est aussi configuré pour sélectionner les passerelles de communication S-GW et PGW qui vont mettre en œuvre un canal de communication permanent (ou « default bearer », en anglais) entre le terminal de l'utilisateur UE-A et son réseau nominal. Selon cet exemple de réalisation de l'invention, l'équipement de gestion de la mobilité comprend un dispositif 300 de gestion d'une table de numéros d'urgence EL du réseau visité, associant à des numéros de téléphone locaux au réseau visité des identifiants de ressources normalisés, par exemple de type URN.

Avantageusement, il est aussi configuré pour recevoir du réseau nominal du terminal de l'utilisateur UE-A une demande de transmission de la table de numéros d'urgence EL et pour lui transmettre la table en réponse à cette demande.

Avantageusement, le dispositif 300 comprend une mémoire MEM3 non volatile dans laquelle est stockée la table de numéros d'urgence EL. Alternativement, elle est stockée dans une mémoire distante, auquel le dispositif 300 peut accéder.

Avantageusement, le dispositif 300 comprend enfin un module TX/RX de réception et de transmission de messages à destination/en provenance du réseau nominal et à destination/en provenance du terminal de l'utilisateur UE-A qui s'est attaché au réseau visité.

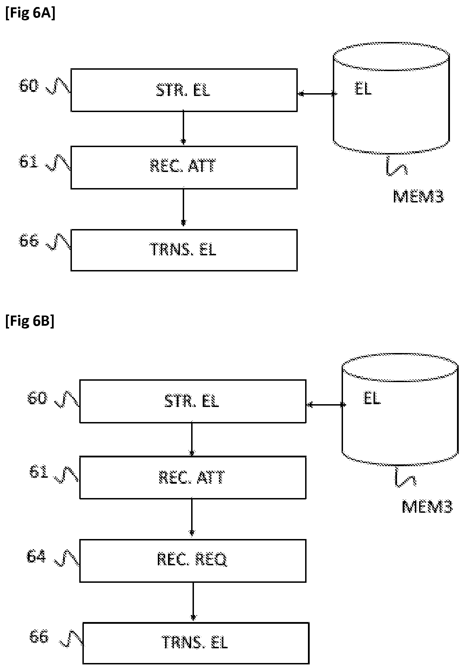

Le dispositif 300 met ainsi en œuvre le procédé de gestion d'une table de numéros d'urgence selon l'invention qui sera détaillé ci-après en relation avec les figures 6A-6B.

La figure 2 présente enfin un exemple d'architecture d'un système 10 de gestion d'une demande d'enregistrement d'un terminal d'un utilisateur à son réseau nominal, lorsqu'il est attaché à un réseau visité VPLMN. Un tel système comprend ledit terminal de l'utilisateur UE-A, l'équipement de proximité P-CSCF comprenant le dispositif 100 de traitement d'une demande d'enregistrement d'un terminal d'un utilisateur, l'équipement de contrôle PCRF comprenant le dispositif 200 de mise à disposition d'une table de numéros d'urgence du réseau visité et l'équipement MME comprenant le dispositif 300 de gestion d'une table de numéros d'urgence du réseau visité.

On présente désormais, en relation avec les figures 4A et 4B, sous une forme de logigrammes, des exemples de mise en œuvre d'un procédé de traitement d'une demande d'enregistrement d'un terminal d'un utilisateur, selon l'invention.

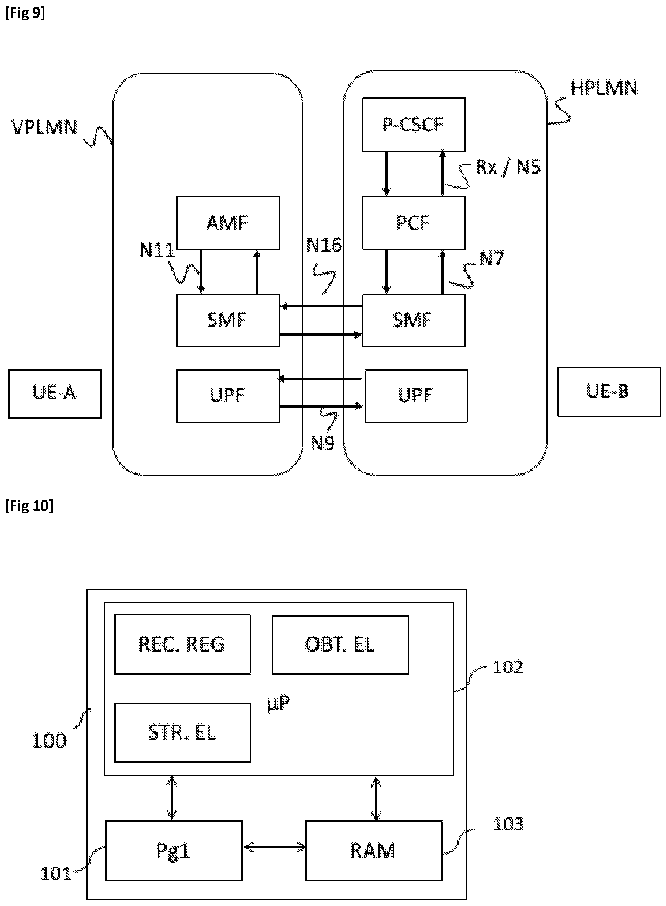

Dans ces exemples, le terminal de l'utilisateur UE-A d'un réseau nominal HPLMN est en situation d'itinérance et s'est attaché à un autre réseau de communication, dit réseau visité VPLMN. Ce réseau est interconnecté avec le réseau nominal, par exemple au moyen d'une connexion de type « S8hr » telle qu'illustrée par la figure 1. On note que l'invention s'applique aussi à d'autres architectures, comme par exemple celle de la figure 9 qui présente l'exemple d'une architecture 5GC selon laquelle les deux réseaux sont interconnectés par une interface N16 du plan de contrôle, c'est-à-dire pour acheminer les flux de signalisation entre les entités du réseau, et une interface N9 du plan de l'utilisateur, c'est-à-dire pour acheminer les flux de signalisation de communications multimédia sur IP, par exemple selon le protocole SIP, et les flux média, par exemple la voix.

Par exemple, ce procédé est mis en œuvre au niveau d'un équipement nœud du réseau nominal, dit équipement de proximité, qui constitue pour le terminal de l'utilisateur UE-A le point d'accès aux services IMS de ce réseau. On suppose qu'il est mis en œuvre par le dispositif 100, lequel est intégré dans un équipement de proximité P-CSCF du réseau nominal HPLMN.

En relation avec la figure 4A, le dispositif 100 reçoit en 40 une demande d'enregistrement « Register » ou REG en provenance du terminal de l'utilisateur. Cette demande du terminal de l'utilisateur UE-A a pour objet de signaler sa présence à son réseau nominal, en particulier le système IMS de ce réseau nominal. Cette demande d'enregistrement est transparente pour le réseau visité VPLMN qui la relaie vers le réseau nominal HPLMN du terminal comme n'importe quel autre message, puisque c'est le réseau nominal qui a la charge de gérer les services multimédia pour ce terminal, en particulier les appels de voix sur IP.

En 44, le dispositif 100 obtient une table EL de numéros d'urgence (ou « Emergency List », en anglais) du réseau visité. Cette table EL associe à des numéros de téléphone locaux au réseau visité, par exemple des numéros courts, des identifiants de ressource normalisés, par exemple de type URN, comme illustré par la Fig. 3 déjà décrite. De tels identifiants URN sont interprétables par n'importe quel réseau de télécommunication et servent à identifier un service d'urgence de sorte à ce qu'il soit accessible depuis n'importe quel réseau.

Selon un premier mode de réalisation de l'invention illustré par la figure 4B, l'étape d'obtention 44 comprend une étape optionnelle 443 de vérification d'une présence d'une telle table EL en mémoire. Par exemple, le dispositif 100 interroge une base de données à partir d'un identifiant du réseau visité ID_VPLMN pour obtenir une table de numéros d'urgence EL précédemment stockée en mémoire, à l'occasion de l'attachement au réseau visité VPLMN du terminal de l'utilisateur UE-A ou d'un autre terminal d'un utilisateur. S'il reçoit une réponse positive, il vérifie en outre à l'aide d'un indicateur de validité IV associé à cette table, si elle est toujours valide ou si elle doit être considérée comme obsolète. Par exemple, cet indicateur de validité est un compteur ou temporisateur ( « timer », en anglais) que le dispositif 100 compare à un seuil prédéterminé. Si sa valeur est supérieure au seuil, par exemple égal à 24 heures, alors la version de la table EL stockée en mémoire est considérée comme obsolète et l'étape d'obtention 44 est réalisée

Si la valeur est inférieure au seuil, la table EL est considérée comme valide et il n'est pas nécessaire de requérir une nouvelle version de la table EL auprès du réseau visité ou d'un autre équipement du réseau nominal. Éventuellement, le dispositif 100 peut charger la table dans une mémoire accessible plus rapidement, par exemple une mémoire locale si la table EL était stockée dans une mémoire distante.

Sinon, le dispositif 100 déclenche l'étape 441 de transmission d'une demande REQ de transmission d'une table de numéros d'urgence à destination d'un équipement de contrôle de ressources mises à disposition du terminal UE-A, appartenant au réseau nominal, pour relais vers le réseau visité. L'équipement de contrôle en question du réseau nominal est configuré pour gérer les sessions réseau du terminal UE-A de l'utilisateur dans le réseau nominal HPLMN du terminal de l'utilisateur. Le dispositif 100 reçoit une réponse REP en 447, comprenant la table EL demandée. Il la stocke en mémoire en 449.

Par exemple, la demande REQ de transmission de la table EL de numéros d'urgence est transmise dans un message déterminé comprenant l'identifiant du réseau visité ID_VPLMN. Par exemple, le message déterminé est une demande d'information de type Diameter AAR comprenant l'identifiant du réseau visité et la demande est exprimée en insérant dans ce message un champ représentatif d'une action d'un type spécifique, par exemple ici de type « Emergency List ».

Selon un deuxième mode de réalisation de l'invention, le dispositif 100 ne vérifie pas s'il dispose déjà d'une table de numéros d'urgence en mémoire pour le réseau visité par le terminal de l'utilisateur UE-A, mais la demande systématiquement en 441 et n'a donc pas besoin de connaître préalablement l'identifiant du réseau visité. Par exemple, sa demande REQ de transmission de la table EL de numéros d'urgence est insérée dans un message de requête de transmission d'un identifiant du réseau visité. Ce message est généralement adressé par l'équipement de proximité à l'équipement de contrôle suite à la réception de la demande d'enregistrement REG. Il s'agit par exemple d'une demande d'information de type Diameter AAR comprenant un premier champ représentatif d'une action de type « PLMN-CHANGE », connue en soi et un deuxième champ représentatif d'une action de type « Emergency-List » telle qu'évoquée ci-dessus.

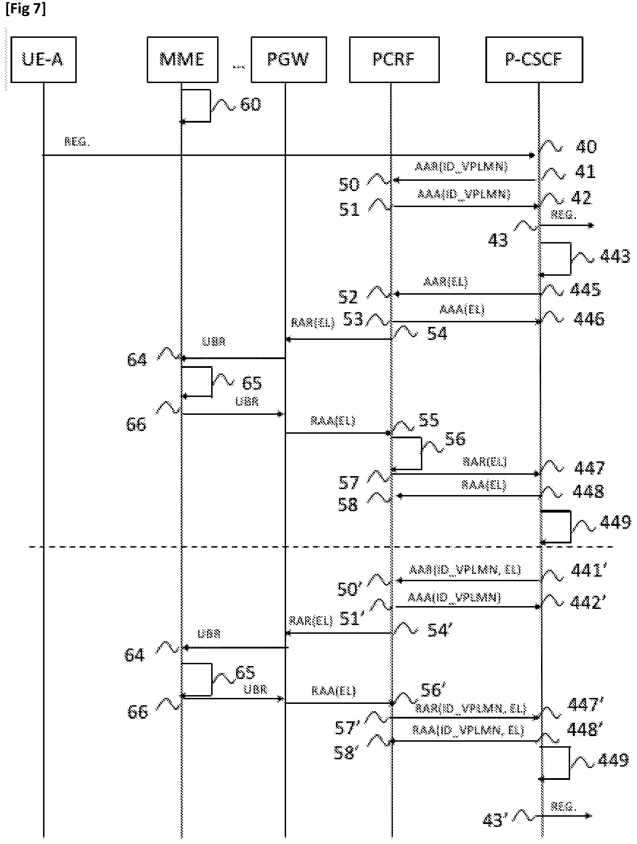

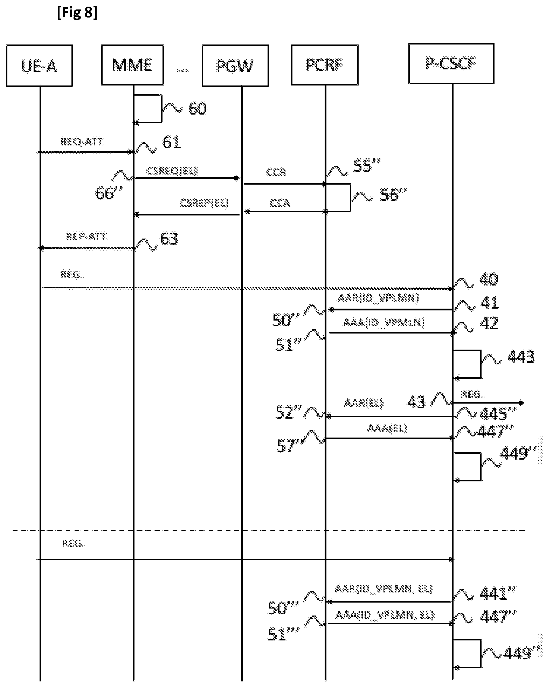

Des exemples de réalisation seront détaillés ci-après en relation avec les figures 7 et 8.

On présente maintenant, en relation avec les figures 5A-5C, sous une forme de logigrammes, des exemples de mise en œuvre d'un procédé de mise à disposition d'un réseau de communication, dit réseau nominal, d'une table de numéros d'urgence d'un réseau de communication visité par terminal UE-A d'un utilisateur du réseau nominal, selon l'invention. Par exemple, ce procédé est mis en œuvre par le dispositif 200 lequel est intégré dans un équipement de contrôle PCRF du réseau nominal HPLMN.

En relation avec la figure 5A, le dispositif 200 obtient en 54 une table de numéros d'urgence EL de l'équipement 300 de gestion de la mobilité du terminal UE-A (lequel est ici intégré dans une entité MME) du réseau visité VPLMN. Il la stocke en 56 dans une mémoire MEM2 locale au dispositif 200 (par exemple une mémoire de l'entité PCRF du réseau nominal) ou distante, et la transmet en 57 à l'équipement de proximité P-CSCF.

Selon un premier mode de réalisation de l'invention illustré par la figure 5B, le dispositif 200 reçoit préalablement en 52 une demande de transmission de la table de numéros d'urgence du réseau visité en provenance de l'équipement de proximité P-CSCF, qu'il relaie en 54 à destination du réseau visité.

A réception en 55 d'une réponse du réseau visité comprenant la table de numéros d'urgence EL demandée, il la stocke en mémoire (MEM2) en 56 et la retransmet à l'équipement de proximité en 57.

Selon un deuxième mode de réalisation illustré par la figure 5C, le dispositif 200 reçoit la table de numéros d'urgence EL du réseau visité en 55 avant de recevoir une demande de transmission de cette table de la part de l'équipement de proximité P-CSCF en 52. Par exemple, il reçoit la table EL dans un message de signalisation Diameter CCR (pour « Credit Control Request » en anglais) comprenant une requête de création de session Diameter en vue de traiter une demande d'enregistrement du terminal UE-A. L'envoi de cette requête par le réseau visité est déclenché à réception d'une demande d'attachement du terminal de l'utilisateur UE-A au réseau visité et fait partie de la procédure d'attachement. Pour rappel, la demande d'enregistrement REG précédemment évoquée n'est émise par le terminal de l'utilisateur UE-A qu'une fois la procédure d'attachement au réseau visité terminée. Le dispositif 200 retransmet la table de numéros d'urgence à l'équipement de proximité P-CSCF en 57.

On note que dans ces deux modes de réalisation, le PCRF réutilise pour répondre à l'équipement de proximité P-CSCF, la même session (Session-ID) Diameter que celle qui a servi pour transmettre la requête initiale. Les extrémités (source et destination) de la session ne changent pas, ce qui garantit à l'entité PCRF de répondre au P-CSCF demandeur.

Des exemples de réalisation seront détaillés ci-après en relation avec les figures 7 et 8.

On présente désormais, en relation avec les figures 6A et 6B, sous forme de logigrammes, des exemples de mise en œuvre d'un procédé de gestion d'une table de numéros d'urgence dans un réseau de télécommunications, selon l'invention. Dans ces exemples, le procédé est mis en œuvre par le dispositif 300. Avantageusement ce dispositif 300 est intégré dans un équipement nœud du réseau visité par le terminal de l'utilisateur UE-A, par exemple un équipement MME de gestion de la mobilité des terminaux utilisateurs.

Selon un premier mode de réalisation, décrit en relation avec la figure 6A, au cours d'une étape 60, le dispositif 300 obtient la table EL de numéros d'urgence du réseau visité et la stocke en mémoire MEM3. En 66, il transmet ladite table au réseau nominal, suite à la réception en 61 d'une demande d'attachement du terminal de l'utilisateur UE-A au réseau visité. Par exemple, le dispositif 300 la transmet au cours de la procédure d'attachement dans un message de signalisation comprenant une demande de création de session envoyé au réseau nominal. Ce message est reçu notamment par l'équipement de contrôle PCRF du réseau nominal.

Selon un deuxième mode de réalisation décrit en relation avec la figure 6B, les étapes 60 et 61 sont inchangées. En 64 il reçoit du réseau nominal une demande de transmission de la table EL, à laquelle il répond en 66.

Des exemples de réalisation seront détaillés ci-après en relation avec les figures 7 et 8.

On présente désormais, en relation avec la figure 7, sous une forme de diagramme de flux, les échanges de messages entre le terminal de l'utilisateur UE-A, l'équipement de gestion de la mobilité MME du réseau VPLMN visité par le terminal de l'utilisateur UE-A, l'équipement de contrôle PCRF du réseau nominal HPLMN du terminal de l'utilisateur UE-A, et l'équipement de proximité P-CSCF du réseau nominal HPLMN, selon un premier exemple de réalisation de l'invention.

Le terminal de l'utilisateur UE-A émet une demande d'enregistrement, de type SIP Register, depuis un réseau visité VPLMN, qui la retransmet de façon transparente au réseau nominal HPLMN de ce terminal. Elle est reçue en 40 par l'équipement de proximité P-CSCF. A réception, le P-CSCF émet en 41 une requête Diameter AAR vers l'équipement de contrôle PCRF pour lui demander l'identifiant ID_VPLMN du réseau visité VPLMN. Comme illustré par la figure 7, l'interface entre le P-CSCF et le PCRF est de type Diameter Rx. Cette requête comprend une action spécifique de type « Specific-Action :PLMN-CHANGE ». Le PCRF la reçoit en 50. Il répond en 51 en émettant une réponse Diameter AAA ou un message Diameter RAR (pour « Re-Authorization Request », en anglais) comprenant les éléments AVP (pour « Attribute Value Pair », en anglais) 3GPP-SGSN-MCC-MNC permettant d'identifier de manière unique le réseau visité VPLMN et comprenant notamment l'identifiant de réseau mobile MNC (pour « Mobile Network Code », en anglais) et l'identifiant de pays MCC (pour « Mobile Country Code », en anglais du réseau visité. On comprend que selon cet exemple l'identifiant ID_VPLMN du réseau visité comprend deux éléments d'information qui sont l'identifiant MNC et l'identifiant MCC. Le P-CSCF reçoit l'identifiant ID_VPLMN en 42. On note que les étapes qui viennent d'être décrites sont déjà normalisées et ne font pas partie de l'invention.

A l'étape 43 le P-CSCF relaie le message REGISTER vers le cœur de réseau IMS, après avoir inséré l'identifiant ID_VPMLN du réseau visité dans un en-tête de ce message.

En 443, le P-CSCF consulte ses données locales pour déterminer s'il dispose de la table de numéros d'urgence EL associée au réseau visité VPLMN identifié par l'identifiant ID_VPLMN. Avantageusement, dans le cas où il dispose déjà d'une version de la table EL, le P-CSCF détermine si une mise à jour de cette version est nécessaire. Par exemple, comme déjà décrit, il dispose d'un indicateur de validité IV associé à cette version de la table EL et le compare à un seuil prédéterminé. En particulier, cet indicateur IV est un compteur représentatif d'une durée de vie de la table TTL (pour « Time To Live », en anglais) qui expire au-delà d'une valeur correspondant au seuil prédéterminé.

Dans le cas où le P-CSCF a établi en 443 qu'il était nécessaire de récupérer une nouvelle version de la table de numéros d'urgence EL, le P-CSCF émet en 445 un message de demande d'informations AAR vers le PCRF sur l'interface Diameter Rx. Selon l'invention, ce message comprend une action spécifique d'un nouveau type, par exemple à titre illustratif de type « EMERGENCY-LIST ».

On présente ci-après un exemple de ce message :
*Command Code: 265 AA*
*AVP: Session-Id val=1234*
*AVP: Auth-Application-Id val=3GPP Rx (16777236)*
   *(...)*
*AVP: Specific-Action val=EMERGENCY-LIST*

Le PCRF reçoit cette demande en 52, en acquitte réception en 53 et prolonge en 54 la demande vers un équipement passerelle PGW du réseau nominal HPLMN via une interface de type Diameter Gx connue de l'homme de métier.

On présente ci-après un exemple de message RAR (Re-Authorization Request) correspondant à cette demande :
Command Code: 258 Re-Auth
*AVP: Session-Id val=4321*
*AVP: Auth-Application-Id val=3GPP Gx (16777238)*
   *(...)*
*AVP : Event-Trigger val=EMERGENCY-LIST*

Comme illustré par la figure 7, la passerelle PGW du réseau nominal HPLMN est connectée à une passerelle SGW du réseau visité VPLMN par une interface de type S8. A réception du message précédent, elle insère la demande reçue dans un message de type « Update Bearer Request » vers la passerelle SGW du réseau VPLMN sur l'interface S8 en utilisant le protocole GTPv2 de la façon suivante :
*GPRS Tunneling Protocol V2*
*Message Type: Update Bearer Request (97)*
   *(...)*
*Emergency List IE*

Selon l'invention, la structure de ce message est modifiée pour inclure un nouvel élément d'information IE (par exemple « Emergency List ») qui spécifie une demande d'information relative à la table des numéros d'urgences EL du réseau visité VPLMN.

A réception, la passerelle SGW du réseau visité retransmet la requête vers un équipement de gestion de mobilité MME du réseau visité. Ces deux équipements sont interconnectés via une interface de type S11. Par exemple, le message transmis au MME par la passerelle SGW est conforme au protocole GTP v2.

Le MME reçoit le message en 64. En 65, il va chercher en mémoire la table de numéros d'urgence EL demandée et l'insère dans un message de réponse qu'il transmet à la SGW en 66. Selon l'invention, ce message comprend un nouvel élément d'information (IE) « Emergency List » qui contient les données de la table EL. Par exemple, ce message de réponse est conforme au protocole GTP v2 :
*GPRS Tunneling Protocol V2*
*Message Type: Update Bearer Response (98)*
   *(...)*
*Emergency List = {(15,urn:service:sos.ambulance); (17, urn:service:sos.police );*
*(196,urn:service:sos.country-specific.fr.196)}*

Ce message est retransmis par la passerelle SGW du réseau visité à la passerelle PGW du réseau nominal HPLMN via l'interface S8. A réception la passerelle PGW retranscrit la réponse SGW dans un message Diameter RAA sur l'interface Diameter Gx, qui contient les données de la table EL ou un élément AVP « Emergency-List » valorisé avec les données de la table EL, comme illustré ci-après : *Command Code, Response:* 265 *AA*
*AVP: Session-Id val=1234*
*AVP: Auth-Application-Id val=3GPP Rx (16777236)*
   *(...)*
*AVP: Specific-Action val=EMERGENCY-LIST*
*AVP: Emergency-List val= {(15,urn:service:sos.ambulance); (17,urn:service:sos.police);*
*(196,urn:service:sos.country-specific.fr.196)}*

Le PCRF reçoit ce message en 55, extrait la table EL du message et la stocke en mémoire en 56. Puis il retransmet la table EL en 57 dans un message Diameter RAR, dans l'élément AVP « Emergency-List », au P-CSCF, tel qu'illustré ci-après :
*Command Code, Response: 258 Re-Auth*
*AVP: Session-Id val=4321*
*AVP: Auth-Application-Id val=3GPP Gx (16777238)*
*AVP : Emergency-List val= {(15,urn:service:sos.ambulance); (17,urn:service:sos.police);*
*(196,urn:service:sos.country-specific.fr.196)}*
Enfin, en 447, le P-CSCF reçoit la table EL demandée dans le message RAR et accuse réception en 448. Il met à jour ou crée ses données locales en 449 à partir de la table reçue.

En variante, le P-CSCF demande l'identifiant ID_VPLMN du réseau visité VPLMN ainsi que la table de numéros d'urgence EL dans une unique et même requête, par exemple de type Diameter AAR, qu'il adresse au PCRF en 441'. Ainsi, il n'interroge qu'une seule fois le PCRF. Dans ce cas, les étapes 445, 446 sont supprimées. La mise à jour de la table est systématique lors de chaque nouvel enregistrement. Dans cette variante, le P-CSCF ne vérifie pas si une version de table de numéros d'urgence est disponible en mémoire, car il ne connaît pas encore l'identifiant du réseau visité VPLMN et il n'utilise pas non plus de temporisateur. Le PCRF dispose déjà de l'identifiant ID du réseau visité et utilise cet identifiant pour interroger en 54' l'équipement MME du réseau visité VPLMN en vue d'obtenir sa table de numéros d'urgence EL. On note que le PCRF envoie une requête Diameter RAR qui est d'abord reçue par la PGW du réseau visité. A réception, la PGW transforme la requête Diameter reçue en une requête GTPv2 de mise à jour du canal UBR (pour « Update Bearer Request », en anglais) qu'elle transmet au MME. Le MME répond en insérant la table EL demandée dans un message GTPv2 de réponse adressé à la PGW. A réception, la PGW insère la réponse dans un message Diameter RAA destiné au PCRF qui la reçoit en 56' et la redirige vers le P-CSCF en 57'.

On note que dans cette variante, la requête d'enregistrement peut être redirigée en 43' vers le cœur de réseau IMS du réseau nominal dès réception de l'identifiant ID_VPLMN du réseau visité avec la table de numéros d'urgence EL en 448' dans le message de réponse Diameter AAA.

On présente désormais, en relation avec la figure 8, sous une forme de diagramme de flux, les échanges de messages entre le terminal de l'utilisateur UE-A, l'équipement de gestion de la mobilité MME du réseau VPLMN visité par le terminal de l'utilisateur UE-A, l'équipement de contrôle P-CRF du réseau nominal du terminal de l'utilisateur et l'équipement de proximité P-CSCF du réseau nominal du terminal de l'utilisateur, selon un deuxième exemple de réalisation de l'invention.

A réception d'une demande d'attachement du terminal de l'utilisateur UE-A dans le réseau visité VPLMN en 61 par le MME, ce dernier émet en 66" une demande de connexion au point d'accès PGW du réseau nominal de ce terminal de l'utilisateur. Cette demande de connexion est par exemple insérée dans un message de demande de création de session conforme au protocole GTPv2, c'est-à-dire un message de type « Create Session Request » qui transite via la passerelle SGW du réseau visité, puis l'interface S8 avec la passerelle PGW du réseau nominal HPLMN. Selon ce mode de réalisation de l'invention, ce message comprend un nouvel élément d'information IE « Emergency List » qui contient les données de la table de numéros d'urgence EL. Ce message prend par exemple la forme suivante :
*GPRS Tunneling Protocol V2*
*Message Type: Create Session Request (32)*
   *(...)*
*Emergency List = {(15,urn:service:sos.ambulance); (17, urn:service:sos.police );*
*(196,urn:service:sos.country-specific.fr.196)}*

La passerelle PGW transmet au PCRF la demande de création de session reçue dans un message de type « Diameter CCR (pour « Credit-Control Request », en anglais), incluant la table EL dans un élément d'information AVP « Emergency-List ».

Par exemple, ce message s'écrit comme suit :
*Command Code, Request : 272 CC*
*AVP: Session-Id val=1234*
*AVP: Auth-Application-Id val=3GPP Gx (16777238)*
   *(...)*
*AVP: Emergency-List vol= {(15,urn:service:sos.ambulance); (17,urn:service:sos.police);*
*(196,urn:service:sos.country-specific.fr.196)}*
Le PCRF reçoit ce message en 55" et stocke la table EL en 56".

On note que le PCRF répond à cette demande CCR par un message CCA (pour « Credit Control Answer », en anglais) comprenant les règles de création du canal de communication permanent (« default bearer »).

Sur réception en 40 d'une demande d'enregistrement par exemple de type SIP REGISTER, en provenance du terminal de l'utilisateur UE-A, le P-CSCF demande au PCRF l'identifiant du réseau visité en 41, comme déjà décrit en relation avec la figure 7. Par exemple, il lui envoie un message Diameter AAR incluant l'action spécifique « Specific-Action PLMN-CHANGE ». Le PCRF émet en 51" une réponse de type AAA comprenant l'identifiant ID_VPLMN du réseau visité VPLMN. Elle est reçue en 42 par le P-CSCF. En 443, le P-CSCF utilise l'identifiant ID_VPLMN reçu pour vérifier si une table de numéros d'urgence est disponible en mémoire pour le réseau visité. Si c'est le cas, il vérifie avantageusement si elle n'est pas obsolète, à l'aide d'un indicateur IV de validité, comme précédemment décrit. Il propage aussi la demande d'enregistrement SIP REGISTER en 43 vers le cœur du réseau IMS après avoir inséré l'identifiant ID_VPLMN du réseau visité VPLMN. On note à cet égard que l'invention n'interfère pas avec cette procédure standardisée d'enregistrement.

Si le P-CSCF a établi qu'aucune mise à jour de la table de numéros d'urgence associée au réseau visité n'était nécessaire, le procédé d'obtention de la table selon l'invention est terminé.

Si au contraire la table des numéros d'urgence a besoin d'être récupérée, le P-CSCF émet en 445"un message AAR vers le PCRF contenant la nouvelle action spécifique « Specific-Action EMERGENCY-LIST » pour demander la table de numéros d'urgence EL du réseau visité.

Le PCRF reçoit cette demande en 52". Vu qu'il a déjà reçu la table EL du MME, il répond sans délai au P-CSCF en 57" par exemple en insérant la table EL demandée dans un message d'accusé-réception de type Diameter. Dans ce deuxième mode de réalisation, il n'est pas nécessaire d'attendre la réception d'un message RAR subséquent, comme dans le premier mode de réalisation décrit en relation avec la figure 7.

Par exemple, ce message s'écrit comme suit :
*Command Code, Response: 265 AA*
*AVP: Session-Id val=1234*
*AVP: Auth-Application-Id val=3GPP Rx (16777236)*
*AVP : Emergency-List val= {(15,urn:service:sos.ambulance); (17,urn:service:sos.police);*
*(196,urn:service:sos.country-specific.fr.196)}*
Le P-CSCF reçoit ce message en 447" et met à jour ses données locales avec la table EL reçue en 449".

On note que la variante au premier mode de réalisation s'applique aussi à ce deuxième mode de réalisation de l'invention.

Selon cette variante illustrée par la partie basse du schéma de la figure 8, le P-CSCF demande à la fois en 441" l'identifiant ID_VPLMN du réseau visité et la table EL de numéros d'urgence associée à ce réseau visité dans une même requête de type Diameter AAR. Cette demande est reçue en 50‴ par le PCRF qui insère directement les deux éléments d'informations demandés en 51‴ dans une réponse, par exemple de type Diameter AAA. Le P-CSCF reçoit le message AAA en 447" et en extrait les deux éléments d'information demandés. Il stocke la table de numéro d'urgence EL en 449".

Les exemples qui viennent d'être décrits concernent une architecture de réseau de communication LTE, dit réseau 4G, selon laquelle le réseau nominal HPLMN du terminal de l'utilisateur UE-A et le réseau visité VPLMN par ce terminal s'interconnectent selon un mode de connexion de type « S8hr ». Bien sûr, le champ d'application de l'invention ne se limite pas à ce type d'architecture, mais englobe plus largement n'importe quelle autre architecture de réseau de communication selon laquelle les flux de données de signalisation et de média du terminal de l'utilisateur se terminent dans son réseau nominal. C'est le cas notamment de la nouvelle architecture de réseau cœur 5GC définie par la 5^{ème} génération de réseaux de communication de l'organisme de normalisation 3GPP (pour « 3rd Generation Partnership Project », en anglais), par exemple décrite dans le document intitulé « 3GPP TS 23.501 V15.3 : System Architecture for the 5G System », version 15.3.0 Release 15 publié par l'ETSI en septembre 2019.

Selon cette architecture, dite SBA (pour « Service Based Architecture », en anglais), illustrée par la figure 9, un équipement AMF du réseau visité VPLMN est l'équivalent du MME, un équipement SMF joue un rôle équivalent à celui des passerelles SGW/PGW sur le plan de contrôle, un équipement UPF est l'équivalent du point d'accès PGW sur le plan utilisateur, et un équipement PCF est l'équivalent de l'entité PCRF de l'architecture de la figure 1. On retrouve l'équipement de proximité P-CSCF dans cette architecture. Les interfaces SBI (pour « Service Based Interfaces », en anglais) entre ces nouveaux équipements et les protocoles qu'elles mettent en œuvre, par exemple décrites dans le document intitulé « 3GPP TS 29500 V16.6 : « Technical Realization of Service Based Architecture », publié par l'ETSI en décembre 2020, sont les suivantes :
- l'interface Rx Diameter entre P-CSCF et PCF est maintenue mais elle peut aussi être remplacée par une interface httpv2 appelée aussi N5 ;
- l'interface N16 entre les SMFs du réseau visité et du réseau nominal utilise le protocole http/2;
- l'interface N7 entre PCF et SMF et du réseau nominal utilise le protocole http/2;
- l'interface N9 entre les UPFs du réseau visité et du réseau nominal utilise le protocole http/2.

L'invention qui vient d'être décrite est donc immédiatement transposable à l'architecture de la figure 9 Par exemple, le dispositif 100 est intégré au P-CSCF, le dispositif 200 au PCF et le dispositif 300 à l'équipement AMF.

On présente maintenant, en relation avec la figure 10, un exemple de structure matérielle d'un dispositif 100 de traitement d'une demande d'enregistrement d'un terminal d'un utilisateur selon l'invention, intégré dans un équipement de proximité du réseau nominal, comprenant au moins un module de réception REC. REG d'une demande d'enregistrement en provenance du terminal, ladite demande d'enregistrement ayant été transmise par le réseau visité, et un module OBT. EL d'obtention d'une table de numéros d'urgence, ladite table associant des numéros d'urgence locaux au réseau visité à des identifiants de ressources normalisés. Avantageusement le dispositif 100 comprend en outre un module STR. EL de stockage de la table de numéros d'urgence dans une mémoire et d'un indicateur de validité de ladite table.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 100 comprend une mémoire vive 103 (par exemple une mémoire RAM), une unité de traitement 102 équipée par exemple d'un processeur, et pilotée par un programme d'ordinateur Pg1, représentatif des modules de réception et d'obtention, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. La mémoire vive 103 peut aussi contenir une table de numéros d'urgence associée au réseau visité VPLMN, ladite table comprenant des entrées associant chacune à un numéro de téléphone d'urgence local au réseau visité un identifiant de ressource normalisé.

La figure 10 illustre seulement une manière particulière, parmi plusieurs possibles, de réaliser le dispositif 100 afin qu'il effectue les étapes du procédé de traitement d'une demande d'enregistrement d'un terminal d'un utilisateur tel que détaillé ci-dessus, en relation avec les figures 4A-4B, 7 et 8 dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une clé USB, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 100 intégré dans un équipement de proximité, par exemple un serveur P-CSCF du réseau de communication du terminal de l'utilisateur, dit réseau nominal.

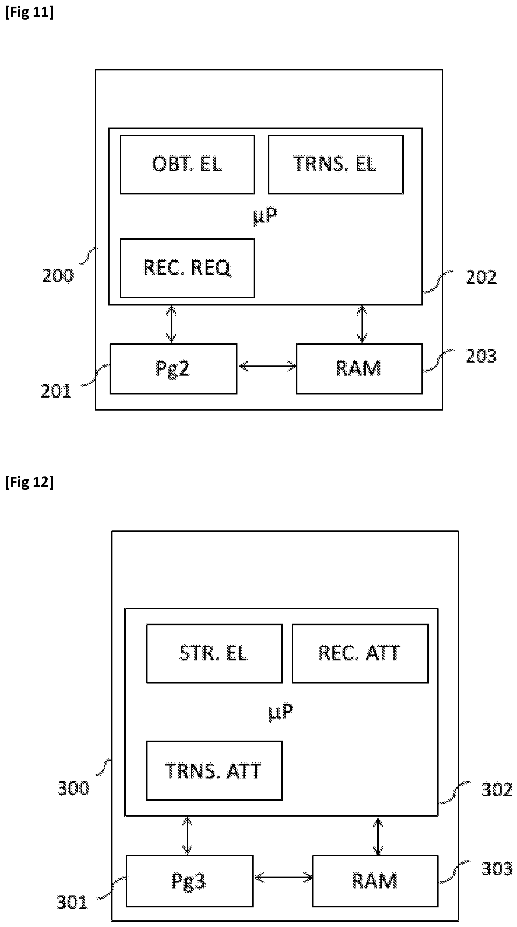

On présente ensuite, en relation avec la figure 11, un exemple de structure matérielle d'un dispositif 200 de mise à disposition par un réseau de communication d'un utilisateur d'un terminal, dit réseau nominal, d'une table de numéros d'urgence d'un autre réseau de communication, dit réseau visité, auquel s'est attaché ledit terminal, ladite table associant à un numéro de téléphone d'urgence local au réseau visité, un identifiant normalisé d'un service d'urgence correspondant audit numéro, ledit dispositif comprenant au moins un module OBT. EL d'obtention de ladite table de numéros d'urgence dans un message de signalisation reçu du réseau visité suite à l'attachement du terminal de l'utilisateur et un module TRNS. EL de transmission de ladite table de numéros d'urgence à un équipement de proximité du réseau nominal.

Avantageusement, le dispositif 200 comprend aussi un module de réception REC. REQ d'une demande de transmission de ladite table en provenance de l'équipement de proximité et le relais de ladite demande à destination du réseau visité.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 200 comprend une mémoire vive 203 (par exemple une mémoire RAM), une unité de traitement 202 équipée par exemple d'un processeur, et pilotée par un programme d'ordinateur Pg2, représentatif des modules d'obtention, de réception, de réception d'une demande de transmission et de relais, stocké dans une mémoire morte 201 (par exemple une mémoire ROM ou un disque dur). A l'initialisation, les instructions de code du programme d'ordinateur sont par exemple chargées dans la mémoire vive 203 avant d'être exécutées par le processeur de l'unité de traitement 202. La mémoire vive 203 peut aussi contenir la table de numéros d'urgence, ladite table comprenant des entrées associant chacune à un numéro de téléphone du réseau visité un identifiant de ressource normalisé.

La figure 11 illustre seulement une manière particulière, parmi plusieurs possibles, de réaliser le dispositif 200 afin qu'il effectue les étapes du procédé de mise à disposition d'une table de numéros d'urgence tel que détaillé ci-dessus, en relation avec les figures 5A-5C, 7 et 8 dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 200 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

On présente aussi, en relation avec la figure 12, un exemple de structure matérielle d'un dispositif 300 de gestion d'une table de numéros d'urgence d'un réseau de communication, dit réseau visité, auquel s'est attaché un terminal d'un utilisateur d'un autre réseau de communication, dit réseau nominal, la table associant des numéros de téléphone locaux aux réseau visité à des identifiants de ressources normalisés, ledit dispositif comprenant au moins un module STR. EL de stockage de ladite table et un module de TRNS. EL transmission de ladite table au réseau nominal, suite à la réception REC. ATT d'une demande d'attachement du terminal de l'utilisateur au réseau visité.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 300 comprend une mémoire vive 303 (par exemple une mémoire RAM), une unité de traitement 302 équipée par exemple d'un processeur, et pilotée par un programme d'ordinateur Pg3, représentatif des modules de stockage et de transmission, stocké dans une mémoire morte 301 (par exemple une mémoire ROM ou un disque dur). A l'initialisation, les instructions de code du programme d'ordinateur sont par exemple chargées dans la mémoire vive 303 avant d'être exécutées par le processeur de l'unité de traitement 302. La mémoire vive 303 peut aussi contenir la table EL de numéros d'urgence du réseau visité par le terminal de l'utilisateur.

La figure 12 illustre seulement une manière particulière, parmi plusieurs possibles, de réaliser le dispositif 300 afin qu'il effectue les étapes du procédé de traitement tel que détaillé ci-dessus, en relation avec les figures 6A-6B, 7 et 8 dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 300 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

L'invention qui vient d'être décrite dans ses différents modes de réalisation présente de nombreux avantages. En particulier, elle permet au réseau nominal d'un terminal d'un utilisateur en situation de mobilité d'obtenir dynamiquement une table de numéros d'urgence associée au réseau de communication visité par le terminal de l'utilisateur. Avec l'invention, il n'est plus nécessaire de configurer statiquement au niveau du réseau nominal l'ensemble des numéros d'urgences de l'ensemble des réseaux nationaux auxquels le terminal de l'utilisateur est susceptible de s'attacher, puis d'y associer leur transcription dans un format d'identification de ressources normalisé.

Ainsi l'invention contribue à optimiser la gestion de l'itinérance d'un terminal d'un utilisateur, en évitant les erreurs de saisie des numéros par des opérateurs et en simplifiant la création comme la mise à jour des tables. Elle présente aussi l'avantage de réutiliser les interfaces et protocoles actuellement en vigueur dans les réseaux de communication actuels proposant des services multimédia sur IP à leurs clients.

## Revendications

1. Procédé de traitement d'une demande d'enregistrement d'un terminal (UE-A) d'un utilisateur d'un réseau de communication, dit réseau nominal (HPLMN), ledit réseau nominal étant configuré pour fournir des services multimédia audit terminal, ledit terminal étant attaché à un autre réseau de communication, dit réseau visité (VPLMN), interconnecté avec le réseau nominal par une interface de connexion permettant d'acheminer au moins les flux de signalisation liés à l'exécution desdits services multimédia fournis par ledit réseau nominal audit terminal, **caractérisé en ce que** ledit procédé est mis en œuvre au niveau d'un équipement de proximité (P-CSCF) du réseau nominal et **en ce qu'**il comprend :
sur réception (40) d'une demande d'enregistrement en provenance du terminal de l'utilisateur, ladite demande d'enregistrement ayant été transmise par le réseau visité, l'obtention (44) d'une table (EL) de numéros d'urgence du réseau visité, ladite table associant à au moins un numéro d'urgence local au réseau visité un identifiant de ressource normalisé, et **en ce que** ladite table de numéros d'urgence a été reçue du réseau visité par le réseau nominal par ladite interface suite à la réception de ladite demande d'enregistrement ou d'une demande d'enregistrement précédente d'un terminal d'un utilisateur attaché au réseau visité
l'obtention de ladite table (EL) comprenant au moins un parmi
une émission (441) d'une demande de transmission de ladite table de numéros d'urgence à destination d'un équipement de contrôle (PCRF) du réseau nominal pour relais vers le réseau visité par ladite interface,
une vérification (443) de la présence en mémoire de ladite table de numéros d'urgence, préalablement reçue en provenance d'un équipement de contrôle (PCRF) du réseau nominal, et de la validité de cette table.

2. Procédé de traitement selon la revendication 1, **caractérisé en ce que** lorsque l'obtention comprend l'émission (441) d'une demande de transmission de la table de numéros d'urgence à destination d'un équipement de contrôle (PCRF) du réseau nominal pour relais vers le réseau visité par ladite interface, ledit équipement de contrôle (PCRF) est configuré pour gérer des ressources réseau mises à disposition du terminal de l'utilisateur, et l'obtention comprend en outre la réception (447) d'une réponse dans un message de signalisation comprenant ladite table.

3. Procédé de traitement selon la revendication 2, **caractérisé en ce qu'**il comprend en outre
- sur réception d'un identifiant (ID_VPLMN) du réseau visité (VPLMN), la vérification (443) qu'une dite table (EL) de numéros d'urgence est déjà disponible dans le réseau nominal (HPLMN) pour cet identifiant ; et
- ladite demande de transmission est émise lorsqu'aucune table de numéros d'urgence n'est disponible ou lorsque la table de numéros d'urgence disponible est associée à un indicateur de validité dépassée.

4. Procédé de traitement selon la revendication 3, **caractérisé en ce que** ladite demande de transmission de la table de numéros d'urgence est transmise dans un message comprenant l'identifiant du réseau visité.

5. Procédé de traitement selon la revendication 2, **caractérisé en ce que** la demande de transmission de la table de numéros d'urgence est insérée dans un message de requête d'obtention de l'identifiant du réseau visité, ledit message étant transmis suite à la réception de la demande d'enregistrement du terminal de l'utilisateur par l'équipement de proximité.

6. Procédé de mise à disposition dans un réseau de communication d'un terminal (UE-A) d'un utilisateur, dit réseau nominal (HPLMN), d'une table de numéros d'urgence (EL) d'un autre réseau de communication, dit réseau visité (VPLMN), auquel est attaché ledit terminal, ledit réseau visité étant interconnecté avec le réseau nominal par une interface de connexion permettant d'acheminer au moins les flux de signalisation liés à l'exécution des services multimédia fournis par ledit réseau nominal audit terminal, ladite table associant à au moins un numéro d'urgence local au réseau visité un identifiant de ressource normalisé correspondant audit numéro, des identifiants de ressources normalisés correspondant auxdits numéros, **caractérisé en ce que** le procédé est mis en œuvre dans le réseau nominal par un équipement de contrôle (PCRF) de ressources réseau mises à disposition du terminal et comprend :
l'obtention (54) de ladite table de numéros d'urgence dans un message de signalisation reçu d'un équipement de gestion de mobilité (300) du terminal du réseau visité par ladite interface suite à l'attachement du terminal de l'utilisateur ; et
la transmission (57) de ladite table de numéros d'urgence à un équipement de proximité (P-CSCF) du réseau nominal.

7. Procédé de mise à disposition selon la revendication 6, **caractérisé en ce que** ledit message de signalisation reçu du réseau visité comprend en outre une demande de création d'une session pour le terminal de l'utilisateur.

8. Procédé de mise à disposition selon l'une quelconque des revendications 6 et 7, **caractérisé en ce que** le procédé comprend, sur réception d'une requête dudit équipement de proximité du réseau nominal, la transmission de ladite table audit équipement de proximité.

9. Procédé de mise à disposition selon la revendication 6, **caractérisé en ce qu'**il comprend la réception (52) d'une demande de transmission de ladite table en provenance de l'équipement de proximité et le relais (54) de ladite demande à destination du réseau visité.

10. Procédé de gestion d'une table (EL) de numéros d'urgence d'un réseau de communication, dit réseau visité, auquel est attaché un terminal d'un utilisateur d'un autre réseau de communication, dit réseau nominal, ledit réseau visité étant interconnecté avec le réseau nominal par une interface de connexion permettant d'acheminer au moins les flux de signalisation liés à l'exécution des services multimédia fournis par ledit réseau nominal audit terminal, ladite table associant à au moins un numéro d'urgence local au réseau visité un identifiant de ressource normalisé correspondant audit numéro, **caractérisé en ce que** ledit procédé est mis en œuvre par un équipement de gestion d'une mobilité (MME) du terminal du réseau visité et **en ce qu'**il comprend le stockage (60) de ladite table de numéros d'urgence et la transmission (66) de ladite table de numéros d'urgence à un équipement de contrôle (PCRF) de ressources réseau du réseau nominal dans un message de signalisation par ladite interface, suite à la réception (61) d'une demande d'attachement du terminal au réseau visité.

11. Procédé de gestion selon la revendication 10, **caractérisé en ce que** ladite table est transmise dans un message de signalisation comprenant une demande de création d'une session pour le terminal de l'utilisateur avec le réseau nominal.

12. Procédé de gestion selon la revendication 10, **caractérisé en ce que** ladite table est transmise sur réception (64) d'une demande du réseau nominal, ladite demande ayant été reçue suite à la transmission par le réseau visité au réseau nominal d'une demande d'enregistrement du terminal de l'utilisateur.

13. Dispositif (100) de traitement d'une demande d'enregistrement d'un terminal (UE-A) d'un utilisateur d'un réseau de communication, dit réseau nominal (HPLMN), ledit réseau nominal étant configuré pour fournir des services multimédia audit terminal, ledit terminal étant attaché à un autre réseau de communication, dit réseau visité (VPLMN), interconnecté avec le réseau nominal ledit réseau visité étant interconnecté avec le réseau nominal par une interface de connexion permettant d'acheminer au moins les flux de signalisation liés à l'exécution desdits services multimédia fournis par ledit réseau nominal audit terminal, **caractérisé en ce que** ledit dispositif est configuré pour mettre en œuvre au niveau d'un équipement de proximité (P-CSCF) du réseau nominal :
sur réception (REC. REG) d'une demande d'enregistrement en provenance du terminal de l'utilisateur, ladite demande d'enregistrement ayant été transmise par le réseau visité, l'obtention (OBT. EL) d'une table (EL) de numéros d'urgence du réseau visité, ladite table associant à au moins un numéro d'urgence local au réseau visité un identifiant de ressource normalisé correspondant audit numéro,
et **en ce que** ladite table de numéros d'urgence a été reçue du réseau visité par le réseau nominal par ladite interface suite à la réception de ladite demande d'enregistrement ou d'une demande d'enregistrement précédente d'un terminal d'un utilisateur attaché au réseau visité
l'obtention de ladite table (EL) comprenant au moins un parmi
une émission (441) d'une demande de transmission de ladite table de numéros d'urgence à destination d'un équipement de contrôle (PCRF) du réseau nominal pour relais vers le réseau visité par ladite interface,
une vérification (443) de la présence en mémoire de ladite table de numéros d'urgence, préalablement reçue en provenance d'un équipement de contrôle (PCRF) du réseau nominal, et de la validité de cette table.

14. Dispositif (200) de mise à disposition par un réseau de communication d'un terminal d'un utilisateur (UE-A), dit réseau nominal (HPLMN), d'une table (EL) de numéros d'urgence d'un autre réseau de communication, dit réseau visité (VPLMN), auquel est attaché ledit terminal, ledit réseau visité étant interconnecté avec le réseau nominal par une interface de connexion permettant d'acheminer au moins les flux de signalisation liés à l'exécution des services multimédia fournis par ledit réseau nominal audit terminal, ladite table associant à au moins un numéro d'urgence local au réseau visité un identifiant de ressource normalisé correspondant audit numéro, **caractérisé en ce que** le dispositif est configuré pour mettre en œuvre dans le réseau nominal au niveau d'un équipement (PCRF) de contrôle de ressources réseau mises à disposition du terminal:
l'obtention (OBT. EL) de ladite table de numéros d'urgence dans un message de signalisation reçu d'un équipement de gestion de mobilité (300) du terminal du réseau visité par ladite interface suite à l'attachement du terminal de l'utilisateur ; et
la transmission (TRNS. EL) de ladite table de numéros d'urgence à un équipement de proximité (P-CSCF) du réseau nominal.

15. Dispositif (300) de gestion d'une table (EL) de numéros d'urgence d'un réseau de communication, dit réseau visité (VPLMN), auquel est attaché un terminal d'un utilisateur (UE-A) d'un autre réseau de communication, dit réseau nominal (HPLMN), ledit réseau visité étant interconnecté avec le réseau nominal par une interface de connexion permettant d'acheminer au moins les flux de signalisation liés à l'exécution des services multimédia fournis par ledit réseau nominal audit terminal, ladite table associant à au moins un numéro d'urgence local au réseau visité un identifiant de ressource normalisé correspondant audits numéro, **caractérisé en ce que** ledit dispositif est configuré pour mettre en œuvre au niveau d'un équipement de gestion d'une mobilité (MME) du terminal du réseau visité :
le stockage (STR. EL) de ladite table de numéros d'urgence et la transmission (TRNS. EL) de ladite table de numéros d'urgence à un équipement de contrôle (PCRF) de ressources réseau du réseau nominal dans un message de signalisation par ladite interface, suite à la réception (REC. ATT) d'une demande d'attachement du terminal au réseau visité.

16. Système de gestion (10) d'une demande d'enregistrement d'un terminal d'un utilisateur (UE-A) à un réseau de communication auquel il est abonné, dit réseau nominal (HPLMN), ledit terminal de l'utilisateur étant attaché à un autre réseau de communication, dit réseau visité (VPLMN), **caractérisé en ce qu'**il comprend ledit terminal de l'utilisateur (UE-A), un dispositif (100) de traitement d'une demande d'enregistrement d'un terminal d'un utilisateur selon la revendication 13, un dispositif (200) de mise à disposition d'une table de numéros d'urgence du réseau visité selon la revendication 14 et un dispositif de gestion d'une table de numéros d'urgence du réseau visité selon la revendication 15.

## Patentansprüche

1. Verfahren zur Verarbeitung einer Anforderung zur Registrierung eines Endgeräts (UE-A) eines Benutzers eines Kommunikationsnetzes, das als Heimat-Mobilfunknetz (HPLMN) bezeichnet wird, wobei das Heimat-Mobilfunknetz dazu ausgelegt ist, dem Endgerät Multimedia-Dienste bereitzustellen, wobei das Endgerät mit einem anderen Kommunikationsnetz, das als besuchtes Mobilfunknetz (VPLMN) bezeichnet wird, verbunden ist, das mit dem Heimat-Mobilfunknetz durch eine Verbindungsschnittstelle verbunden ist, die es ermöglicht, wenigstens die Signalisierungsströme, die mit der Ausführung der durch das Heimat-Mobilfunknetz bereitgestellten Multimediadienste zusammenhängen, zu dem Endgerät zu leiten, **dadurch gekennzeichnet, dass** das Verfahren an einem Näherungsgerät (P-CSCF) des Heimat-Mobilfunknetzes durchgeführt wird, und dadurch, dass es Folgendes umfasst:
bei Empfang (40) einer Registrierungsanforderung von dem Endgerät des Benutzers, wobei die Registrierungsanforderung von dem besuchten Mobilfunknetz übertragen wurde, das Erhalten (44) einer Tabelle (EL) von Notrufnummern des besuchten Mobilfunknetzes, wobei die Tabelle mindestens einer in Bezug auf das besuchte Mobilfunknetz lokalen Notrufnummer eine standardisierte Ressourcenkennung zuordnet, und dadurch, dass die Notrufnummerntabelle von dem besuchten Mobilfunknetz durch das Heimat-Mobilfunknetz über die Schnittstelle nach dem Empfang der Registrierungsanforderung oder einer vorhergehenden Registrierungsanforderung von einem mit dem besuchten Mobilfunknetz verbundenen Endgerät eines Benutzers empfangen wurde,
wobei das Erhalten der Tabelle (EL) mindestens eines umfasst von
einem Senden (441) einer Anforderung zur Übertragung der Notrufnummerntabelle an ein Steuergerät (PCRF) des Heimat-Mobilfunknetzes zum Weiterleiten an das besuchte Mobilfunknetz durch die Schnittstelle,
einer Überprüfung (443) des Vorhandenseins der Notrufnummerntabelle, die zuvor von einem Steuergerät (PCRF) des Heimat-Mobilfunknetzes empfangen wurde, im Speicher und der Gültigkeit dieser Tabelle.

2. Verarbeitungsverfahren nach Anspruch 1, **dadurch gekennzeichnet, dass**, wenn das Erhalten das Senden (441) einer Anforderung zur Übertragung der Notrufnummerntabelle an ein Steuergerät (PCRF) des Heimat-Mobilfunknetzes zum Weiterleiten an das besuchte Mobilfunknetz durch die Schnittstelle umfasst, das Steuergerät (PCRF) dazu ausgelegt ist, Netzressourcen zu verwalten, die dem Endgerät des Benutzers zur Verfügung gestellt werden, und das Erhalten außerdem den Empfang (447) einer Antwort in einer Signalisierungsnachricht umfasst, welche die Tabelle umfasst.

3. Verarbeitungsverfahren nach Anspruch 2, **dadurch gekennzeichnet, dass** es außerdem Folgendes umfasst:
- bei Empfang einer Kennung (ID_VPLMN) des besuchten Mobilfunknetzes (VPLMN) die Überprüfung (443), ob eine besagte Notrufnummerntabelle (EL) bereits im Heimat-Mobilfunknetz (HPLMN) für diese Kennung verfügbar ist; und
- dass diese Übertragungsanforderung gesendet wird, wenn keine Notrufnummerntabelle verfügbar ist oder wenn der verfügbaren Notrufnummerntabelle ein veralteter Gültigkeitsindikator zugeordnet ist.

4. Verarbeitungsverfahren nach Anspruch 3, **dadurch gekennzeichnet, dass** die Anforderung zur Übertragung der Notrufnummerntabelle in einer Nachricht übertragen wird, welche die Kennung des besuchten Mobilfunknetzes umfasst.

5. Verarbeitungsverfahren nach Anspruch 2, **dadurch gekennzeichnet, dass** die Anforderung zur Übertragung der Notrufnummerntabelle in eine Nachricht zur Anforderung des Erhaltens der Kennung des besuchten Mobilfunknetzes eingefügt wird, wobei die Nachricht nach dem Empfang der Registrierungsanforderung vom Benutzerendgerät durch das Näherungsgerät übertragen wird.

6. Verfahren zum Bereitstellen, in einem Kommunikationsnetz eines Endgeräts (UE-A) eines Benutzers, das als Heimat-Mobilfunknetz (HPLMN) bezeichnet wird, einer Notrufnummerntabelle (EL) eines anderen Kommunikationsnetzes, das als besuchtes Mobilfunknetz (VPLMN) bezeichnet wird, mit dem das Endgerät verbunden ist, wobei das besuchte Mobilfunknetz mit dem Heimat-Mobilfunknetz durch eine Verbindungsschnittstelle verbunden ist, die es ermöglicht, wenigstens die Signalisierungsströme, die mit der Ausführung der durch das Heimat-Mobilfunknetz bereitgestellten Multimediadienste zusammenhängen, zu dem Endgerät zu leiten, wobei die Tabelle mindestens einer in Bezug auf das besuchte Mobilfunknetz lokalen Notrufnummer eine standardisierte Ressourcenkennung zuordnet, die dieser Nummer entspricht, wobei standardisierte Ressourcenkennungen den Nummern entsprechen, **dadurch gekennzeichnet, dass** das Verfahren in dem Heimat-Mobilfunknetz von einem Gerät zur Steuerung (PCRF) von Netzressourcen durchgeführt wird, die dem Endgerät zur Verfügung gestellt werden, und umfasst:
das Erhalten (54) der Notrufnummerntabelle in einer Signalisierungsnachricht, die von einem Gerät zur Verwaltung der Mobilität (300) des Endgeräts des besuchten Mobilfunknetzes über die Schnittstelle nach dem Verbinden des Endgeräts des Benutzers empfangen wird; und
die Übertragung (57) der Notrufnummerntabelle an ein Näherungsgerät (P-CSCF) des Heimat-Mobilfunknetzes.

7. Bereitstellungsverfahren nach Anspruch 6, **dadurch gekennzeichnet, dass** die Signalisierungsnachricht, die von dem besuchten Mobilfunknetz empfangen wird, außerdem eine Anforderung zum Erstellen einer Sitzung für das Endgerät des Benutzers umfasst.

8. Bereitstellungsverfahren nach einem der Ansprüche 6 und 7, **dadurch gekennzeichnet, dass** das Verfahren bei Empfang einer Anforderung von dem Näherungsgerät des Heimat-Mobilfunknetzes die Übertragung der Tabelle an das Näherungsgerät umfasst.

9. Bereitstellungsverfahren nach Anspruch 6, **dadurch gekennzeichnet, dass** es das Empfangen (52) einer Anforderung zur Übertragung der Tabelle von den Näherungsgerät und das Weiterleiten (54) der Anforderung an das besuchte Mobilfunknetz umfasst.

10. Verfahren zum Verwalten einer Tabelle (EL) von Notrufnummern eines Kommunikationsnetzes, das als besuchtes Mobilfunknetz bezeichnet wird, mit dem ein Endgerät eines Benutzers eines anderen Kommunikationsnetzes, das als Heimat-Mobilfunknetz bezeichnet wird, verbunden ist, wobei das besuchte Mobilfunknetz mit dem Heimat-Mobilfunknetz durch eine Verbindungsschnittstelle verbunden ist, die es ermöglicht, wenigstens die Signalisierungsströme, die mit der Ausführung der durch das Heimat-Mobilfunknetz bereitgestellten Multimediadienste zusammenhängen, zu dem Endgerät zu leiten, wobei die Tabelle mindestens einer in Bezug auf das besuchte Mobilfunknetz lokalen Notrufnummer eine standardisierte Ressourcenkennung zuordnet, die der Nummer entspricht, **dadurch gekennzeichnet, dass** das Verfahren von einem Gerät zur Verwaltung der Mobilität (MME) des Endgeräts des besuchten Mobilfunknetzes durchgeführt wird, und dadurch, dass es das Speichern (60) der Notrufnummerntabelle und die Übertragung (66) der Notrufnummerntabelle an ein Gerät zur Steuerung (PCRF) von Netzressourcen des Heimat-Mobilfunknetzes in einer Signalisierungsnachricht durch die Schnittstelle nach dem Empfang (61) einer Anforderung, das Endgerät mit dem besuchten Mobilfunknetz zu verbinden, umfasst.

11. Verwaltungsverfahren nach Anspruch 10, **dadurch gekennzeichnet, dass** die Tabelle in einer Signalisierungsnachricht übertragen wird, die eine Anforderung zum Erstellen einer Sitzung für das Endgerät des Benutzers mit dem Heimat-Mobilfunknetz umfasst.

12. Verwaltungsverfahren nach Anspruch 10, **dadurch gekennzeichnet, dass** die Tabelle bei Empfang (64) einer Anforderung von dem Heimat-Mobilfunknetz übertragen wird, wobei diese Anforderung nach der Übertragung, durch das besuchte Mobilfunknetz an das Heimat-Mobilfunknetz, einer Anforderung zur Registrierung des Endgeräts des Benutzers empfangen wurde.

13. Vorrichtung (100) zur Verarbeitung einer Anforderung zur Registrierung eines Endgeräts (UE-A) eines Benutzers eines Kommunikationsnetzes, das als Heimat-Mobilfunknetz (HPLMN) bezeichnet wird, wobei das Heimat-Mobilfunknetz dazu ausgelegt ist, dem Endgerät Multimediadienste bereitzustellen, wobei das Endgerät mit einem anderen Kommunikationsnetz, das als besuchtes Mobilfunknetz (VPLMN) bezeichnet wird, verbunden ist, das mit dem Heimat-Mobilfunknetz verbunden ist, wobei das besuchte Mobilfunknetz mit dem Heimat-Mobilfunknetz durch eine Verbindungsschnittstelle verbunden ist, die es ermöglicht, wenigstens die Signalisierungsströme, die mit der Ausführung der durch das Heimat-Mobilfunknetz bereitgestellten Multimediadienste zusammenhängen, zu dem Endgerät zu leiten,
**dadurch gekennzeichnet, dass** die Vorrichtung dazu ausgelegt ist, an einem Näherungsgerät (P-CSCF) des Heimat-Mobilfunknetzes Folgendes durchzuführen:
bei Empfang (REC. einer Registrierungsanforderung von dem Endgerät des Benutzers, wobei die Registrierungsanforderung von dem besuchten Mobilfunknetz übertragen wurde, das Erhalten (OBT. EL) einer Tabelle (EL) von Notrufnummern des besuchten Mobilfunknetzes, wobei die Tabelle mindestens einer in Bezug auf das besuchte Mobilfunknetz lokalen Notrufnummer eine standardisierte Ressourcenkennung zuordnet, die dieser Nummer entspricht,
und dadurch, dass die Notrufnummerntabelle von dem besuchten Mobilfunknetz durch das Heimat-Mobilfunknetz über die Schnittstelle nach dem Empfang der Registrierungsanforderung oder einer vorhergehenden Registrierungsanforderung von einem mit dem besuchten Mobilfunknetz verbundenen Endgerät eines Benutzers empfangen wurde,
wobei das Erhalten der Tabelle (EL) mindestens eines umfasst von
einem Senden (441) einer Anforderung zur Übertragung der Notrufnummerntabelle an ein Steuergerät (PCRF) des Heimat-Mobilfunknetzes zum Weiterleiten an das besuchte Mobilfunknetz durch die Schnittstelle,
einer Überprüfung (443) des Vorhandenseins der Notrufnummerntabelle, die zuvor von einem Steuergerät (PCRF) des Heimat-Mobilfunknetzes empfangen wurde, im Speicher und der Gültigkeit dieser Tabelle.

14. Vorrichtung (200) zur Bereitstellung, durch ein Kommunikationsnetz eines Endgeräts eines Benutzers (UE-A), das als Heimat-Mobilfunknetz (HPLMN) bezeichnet wird, einer Tabelle (EL) von Notrufnummern eines anderen Kommunikationsnetzes, das als besuchtes Mobilfunknetz (VPLMN) bezeichnet wird, mit dem das Endgerät verbunden ist, wobei das besuchte Mobilfunknetz mit dem Heimat-Mobilfunknetz durch eine Verbindungsschnittstelle verbunden ist, die es ermöglicht, wenigstens die Signalisierungsströme, die mit der Ausführung der durch das Heimat-Mobilfunknetz bereitgestellten Multimediadienste zusammenhängen, zu dem Endgerät zu leiten, wobei die Tabelle mindestens einer in Bezug auf das besuchte Mobilfunknetz lokalen Notrufnummer eine standardisierte Ressourcenkennung zuordnet, die dieser Nummer entspricht, **dadurch gekennzeichnet, dass** die Vorrichtung dazu ausgelegt ist, in dem Heimat-Mobilfunknetz an einem Gerät zur Steuerung (PCRF) von Netzressourcen, die dem Endgerät zur Verfügung gestellt werden, Folgendes durchzuführen:
das Erhalten (OBT. EL) der Notrufnummerntabelle in einer Signalisierungsnachricht, die von einem Gerät zur Verwaltung der Mobilität (300) des Endgeräts des besuchten Mobilfunknetzes über die Schnittstelle nach dem Verbinden des Endgeräts des Benutzers empfangen wird; und
die Übertragung (TRNS. EL) der Notrufnummerntabelle an ein Näherungsgerät (P-CSCF) des Heimat-Mobilfunknetzes.

15. Vorrichtung (300) zum Verwalten einer Tabelle (EL) von Notrufnummern eines Kommunikationsnetzes, das als besuchtes Mobilfunknetz (VPLMN) bezeichnet wird, mit dem ein Endgerät eines Benutzers (UE-A) eines anderen Kommunikationsnetzes, das als Heimat-Mobilfunknetz (HPLMN) bezeichnet wird, verbunden ist, wobei das besuchte Mobilfunknetz mit dem Heimat-Mobilfunknetz durch eine Verbindungsschnittstelle verbunden ist, die es ermöglicht, wenigstens die Signalisierungsströme, die mit der Ausführung der durch das Heimat-Mobilfunknetz bereitgestellten Multimediadienste zusammenhängen, zu dem Endgerät zu leiten, wobei die Tabelle mindestens einer in Bezug auf das besuchte Mobilfunknetz lokalen Notrufnummer eine standardisierte Ressourcenkennung zuordnet, die der Nummer entspricht, **dadurch gekennzeichnet, dass** die Vorrichtung dazu ausgelegt ist, einem Gerät zur Verwaltung der Mobilität (MME) des Endgeräts des besuchten Mobilfunknetzes Folgendes durchzuführen:
das Speichern (STR. EL) der Notrufnummerntabelle und die Übertragung (TRNS. EL) der Notrufnummerntabelle an ein Gerät zur Steuerung (PCRF) von Netzressourcen des Heimat-Mobilfunknetzes in einer Signalisierungsnachricht durch die Schnittstelle nach dem Empfang (REC. ATT) einer Anforderung, das Endgerät mit dem besuchten Mobilfunknetz zu verbinden.

16. System zum Verwalten (10) einer Anforderung zur Registrierung eines Endgeräts eines Benutzers (UE-A) an ein Kommunikationsnetz, dessen Abonnent er ist und das als Heimat-Mobilfunknetz (HPLMN) bezeichnet wird, wobei das Endgerät des Benutzers mit einem anderen Kommunikationsnetz, das als besuchtes Mobilfunknetz (VPLMN) bezeichnet wird, verbunden ist, **dadurch gekennzeichnet, dass** es das Endgerät des Benutzers (UE-A), eine Vorrichtung (100) zur Verarbeitung einer Anforderung zur Registrierung eines Endgeräts eines Benutzers nach Anspruch 13, eine Vorrichtung (200) zur Bereitstellung einer Tabelle von Notrufnummern des besuchten Mobilfunknetzes nach Anspruch 14 und eine Vorrichtung zum Verwalten einer Notrufnummerntabelle des besuchten Mobilfunknetzes nach Anspruch 15 umfasst.

## Claims

1. Method for processing a registration request from a terminal (UE-A) of a user of a communication network, referred to as the nominal network (HPLMN), said nominal network being configured to supply multimedia services to said terminal, said terminal being attached to another communication network, referred to as the visited network (VPLMN), interconnected with the nominal network by means of a connection interface which makes it possible to route at least the signalling streams linked to the execution of said multimedia services which are supplied by said nominal network to said terminal, **characterized in that** said method is implemented at the level of a proximity equipment (P-CSCF) of the nominal network and **in that** it comprises:
upon receipt (40) of a registration request from the terminal of the user, said registration request having been transmitted by the visited network, obtaining (44) a table (EL) of emergency numbers of the visited network, said table associating a standardized resource identifier with at least one emergency number which is local to the visited network, and **in that** said table of emergency numbers has been received from the visited network by the nominal network by means of said interface following receipt of said registration request or of a previous registration request from a terminal of a user attached to the visited network,
obtaining said table (EL) comprising at least one of transmitting (441) a request to transmit said table of emergency numbers to a control equipment (PCRF) of the nominal network in order to be relayed to the visited network by means of said interface,
verifying (443) the presence, in memory, of said table of emergency numbers, which was previously received from a control equipment (PCRF) of the nominal network, and the validity of this table.

2. Processing method according to Claim 1, **characterized in that**, when obtaining comprises transmitting (441) a request to transmit the table of emergency numbers to a control equipment (PCRF) of the nominal network in order to be relayed to the visited network by means of said interface, said control equipment (PCRF) is configured to manage network resources provided to the terminal of the user, and obtaining further comprises receiving (447) a response in a signalling message comprising said table.

3. Processing method according to Claim 2, **characterized in that** it further comprises
- upon receipt of an identifier (ID_VPLMN) of the visited network (VPLMN), verifying (443) that a said table (EL) of emergency numbers is already available in the nominal network (HPLMN) for this identifier; and
- said transmission request is transmitted when no table of emergency numbers is available or when the available table of emergency numbers is associated with an indicator of expired validity.

4. Processing method according to Claim 3, **characterized in that** said request to transmit the table of emergency numbers is transmitted in a message comprising the identifier of the visited network.

5. Processing method according to Claim 2, **characterized in that** the request to transmit the table of emergency numbers is inserted in a message for requesting to obtain the identifier of the visited network, said message being transmitted following receipt of the registration request from the terminal of the user by the proximity equipment.

6. Method for providing, in a communication network of a terminal (UE-A) of a user, referred to as the nominal network (HPLMN), a table (EL) of emergency numbers of another communication network, referred to as the visited network (VPLMN), to which said terminal is attached, said visited network being interconnected with the nominal network by means of a connection interface which makes it possible to route at least the signalling streams linked to the execution of the multimedia services which are supplied by said nominal network to said terminal, said table associating a standardized resource identifier corresponding to said number with at least one emergency number which is local to the visited network, standardized resource identifiers corresponding to said numbers, **characterized in that** the method is implemented in the nominal network by an equipment (PCRF) for controlling network resources which are provided to the terminal and comprises:
obtaining (54) said table of emergency numbers in a signalling message received from an equipment (300) for managing roaming of the terminal of the visited network by means of said interface following attachment of the terminal of the user; and
transmitting (57) said table of emergency numbers to a proximity equipment (P-CSCF) of the nominal network.

7. Provision method according to Claim 6, **characterized in that** said signalling message received from the visited network further comprises a request to create a session for the terminal of the user.

8. Provision method according to either one of Claims 6 and 7, **characterized in that** the method comprises, upon receipt of a request from said proximity equipment of the nominal network, transmitting said table to said proximity equipment.

9. Provision method according to Claim 6, **characterized in that** it comprises receiving (52) a request to transmit said table from the proximity equipment and relaying (54) said request to the visited network.

10. Method for managing a table (EL) of emergency numbers of a communication network, referred to as the visited network, to which a terminal of a user of another communication network, referred to as the nominal network, is attached, said visited network being interconnected with the nominal network by means of a connection interface which makes it possible to route at least the signalling streams linked to the execution of the multimedia services which are supplied by said nominal network to said terminal, said table associating a standardized resource identifier corresponding to said number with at least one emergency number which is local to the visited network, **characterized in that** said method is implemented by an equipment (MME) for managing roaming of the terminal of the visited network and **in that** it comprises storing (60) said table of emergency numbers and transmitting (66) said table of emergency numbers to an equipment (PCRF) for controlling network resources of the nominal network in a signalling message by means of said interface, following receipt (61) of a request to attach the terminal to the visited network.

11. Management method according to Claim 10, **characterized in that** said table is transmitted in a signalling message comprising a request to create a session for the terminal of the user with the nominal network.

12. Management method according to Claim 10, **characterized in that** said table is transmitted upon receipt (64) of a request from the nominal network, said request having been received following transmission, by the visited network to the nominal network, of a registration request from the terminal of the user.

13. Device (100) for processing a registration request from a terminal (UE-A) of a user of a communication network, referred to as the nominal network (HPLMN), said nominal network being configured to supply multimedia services to said terminal, said terminal being attached to another communication network, referred to as the visited network (VPLMN), interconnected with the nominal network, said visited network being interconnected with the nominal network by means of a connection interface which makes it possible to route at least the signalling streams linked to the execution of said multimedia services which are supplied by said nominal network to said terminal,
**characterized in that** said device is configured to implement, at the level of a proximity equipment (P-CSCF) of the nominal network:
upon receipt (REC. REG) of a registration request from the terminal of the user, said registration request having been transmitted by the visited network, obtaining (OBT. EL) a table (EL) of emergency numbers of the visited network, said table associating a standardized resource identifier corresponding to said number with at least one emergency number which is local to the visited network,
and **in that** said table of emergency numbers has been received from the visited network by the nominal network by means of said interface following receipt of said registration request or of a previous registration request from a terminal of a user attached to the visited network,
obtaining said table (EL) comprising at least one of transmitting (441) a request to transmit said table of emergency numbers to a control equipment (PCRF) of the nominal network in order to be relayed to the visited network by means of said interface,
verifying (443) the presence, in memory, of said table of emergency numbers, which was previously received from a control equipment (PCRF) of the nominal network, and the validity of this table.

14. Device (200) for providing, by means of a communication network of a terminal (UE-A) of a user, referred to as the nominal network (HPLMN), a table (EL) of emergency numbers of another communication network, referred to as the visited network (VPLMN), to which said terminal is attached, said visited network being interconnected with the nominal network by means of a connection interface which makes it possible to route at least the signalling streams linked to the execution of the multimedia services which are supplied by said nominal network to said terminal, said table associating a standardized resource identifier corresponding to said number with at least one emergency number which is local to the visited network, **characterized in that** the device is configured to, in the nominal network at the level of an equipment (PCRF) for controlling network resources which are provided to the terminal:
obtain (OBT. EL) said table of emergency numbers in a signalling message received from an equipment (300) for managing roaming of the terminal of the visited network by means of said interface following attachment of the terminal of the user; and
transmit (TRNS. EL) said table of emergency numbers to a proximity equipment (P-CSCF) of the nominal network.

15. Device (300) for managing a table (EL) of emergency numbers of a communication network, referred to as the visited network (VPLMN), to which a terminal (UE-A) of a user of another communication network, referred to as the nominal network (HPLMN), is attached, said visited network being interconnected with the nominal network by means of a connection interface which makes it possible to route at least the signalling streams linked to the execution of the multimedia services which are supplied by said nominal network to said terminal, said table associating a standardized resource identifier corresponding to said number with at least one emergency number which is local to the visited network, **characterized in that** said device is configured to, at the level of an equipment (MME) for managing roaming of the terminal of the visited network:
store (STR. EL) said table of emergency numbers and transmit (TRNS. EL) said table of emergency numbers to an equipment (PCRF) for controlling network resources of the nominal network in a signalling message by means of said interface, following receipt (REC. ATT) of a request to attach the terminal to the visited network.

16. System (10) for managing a registration request from a terminal (UE-A) of a user to a communication network to which they are subscribed, referred to as the nominal network (HPLMN), said terminal of the user being attached to another communication network, referred to as the visited network (VPLMN), **characterized in that** it comprises said terminal (UE-A) of the user, a device (100) for processing a registration request from a terminal of a user according to Claim 13, a device (200) for providing a table of emergency numbers of the visited network according to Claim 14 and a device for managing a table of emergency numbers of the visited network according to Claim 15.
